# EUROPEAN PATENT APPLICATION

(11) **EP 2 981 108 A1**
(43) Date of publication of application: **03.02.2016**
(21) Application number: 13884570.6
(22) Date of filing: 15.05.2013
(51) Int. Cl.: H04W 4/24

(54) **GROUP CHARGING METHOD, GATEWAY DEVICE, CHARGING DEVICE, AND COMMUNICATIONS SYSTEM**

(71) Applicant: Huawei Technologies Co., Ltd., Longgang District Shenzhen, Guangdong 518129 (CN)
(72) Inventor: CAI, Hui, Shenzhen Guangdong 518129 (CN); WANG, Lei, Shenzhen Guangdong 518129 (CN); XIA, Xu, Shenzhen Guangdong 518129 (CN)
(74) Representative: Epping - Hermann - Fischer
(86) International application number: PCT/CN2013/075669
(87) International publication number: WO 2014/183282

(57) **Abstract**

The present invention discloses a group charging method, a gateway device, a charging device, and a communications system, and relates to the field of communications technologies. The method includes: obtaining a group identity and personal identity information of a user; obtaining a charging rule generated according to the group identity; and establishing, according to the group identity, the personal identity information, and the charging rule, a charging session for a group account corresponding to the group identity, so that a charging system performs group charging according to the group identity and the charging rule. In the present invention, it is determined, according to a group identity of a user, that the user belongs to a certain group, and accordingly, a charging session is maintained for the user of the group. In this way, group charging can be achieved, thereby avoiding a complex signaling interaction process, and improving the charging efficiency.

## Description

### TECHNICAL FIELD

The present invention relates to the field of communications technologies, and in particular, to a group charging method, a gateway device, a charging device, and a communications system.

### BACKGROUND

With the development of 3^{rd} generation mobile communications systems, the mobile communications systems not only can meet people's demand for voice services, but also can meet demands for value-added services such as videos, audio, and real-time multimedia service interaction. After a user uses a service provided by a network operator, the network operator generates a charging bill for the user. Specifically, a user equipment establishes a bearer-layer data connection to a bearer network, and performs service activation with a service gateway; then an application function (Application Function, hereinafter referred to as AF) of an IP multimedia subsystem (IP Multimedia Subsystem, hereinafter referred to as IMS) delivers policy control information of a service data stream at a bearer layer to a policy and charging rules entity (Policy and Charging Rules Function, hereinafter referred to as PCRF); the PCRF decides a control policy for the service data stream at the bearer layer, generates a charging rule, such as a policy and charging control (Policy and Charging Control, hereinafter referred to as PCC) rule, and delivers the charging rule to a gateway; the gateway executes the delivered charging rule, and performs transmission of offline or online charging information with an online charging system, thereby finally generating a charging bill.

During implementation of the present invention, the inventor finds that the prior art at least has the following problems:

As service forms change constantly, a group service that provides a service for multiple users emerges accordingly. However, because a charging method provided by the prior art is based on user granularity, charging for a group service of multiple users cannot be implemented, resulting in complex signaling interaction and low charging efficiency.

### SUMMARY

In order to solve a problem in the prior art, embodiments of the present invention provide a group charging method, a gateway device, a charging device, and a communications system. The technical solutions are as follows:

According to a first aspect, a group charging method includes:
obtaining a group identity and personal identity information of a user;
obtaining a charging rule generated according to the group identity; and
establishing, according to the group identity, the personal identity information, and the charging rule, a charging session for a group account corresponding to the group identity, so that a charging system performs group charging according to the group identity and the charging rule.

With reference to the first aspect, in a first possible implementation manner of the first aspect, the obtaining a group identity and personal identity information of a user includes:
obtaining the group identity and the personal identity information of the user that are added by a user equipment to an attach request message; or
obtaining the group identity and the personal identity information that are returned by a home subscriber subscription server; or
obtaining the group identity and the personal identity information that are added by a service subscription database or a group subscription database in a profile information response message that are added by a service subscription database or a group subscription database to a profile information response message; or
obtaining the group identity and the personal identity information that are added by a mobility management entity to a create session establishment request message; or
obtaining the group identity and the personal identity information that are added by a policy and charging rules function entity to an IP-CAN session establishment acknowledgement message or an IP CAN session modification acknowledgement message; or
obtaining, according to the personal identity information, the group identity configured on a mobility management entity; or
obtaining the group identity and the personal identity information that are added by an application server to an application service message.

With reference to any one of the foregoing possible implementation manners of the first aspect, in a second possible implementation manner of the first aspect, the establishing, according to the group identity, the personal identity information, and the charging rule, a charging session for a group account corresponding to the group identity includes:
when the charging rule is that one charging session is established for group users having a same group identity, determining, according to the group identity, whether there is a charging session corresponding to the group identity with the charging system already; if yes, sending a credit control modification request message to the charging system, where the credit control modification request message carries the group identity and the personal identity information of the user, so that the charging system adds the personal identity information of the user to the charging session corresponding to the group identity; if not, establishing a charging session for the user according to the group identity and the personal identity information; or
when it is determined that the charging rule is that multiple charging sessions are established for group users having a same group identity, establishing a charging session for the user according to the group identity and the personal identity information.

With reference to any one of the foregoing possible implementation manners of the first aspect, in a third possible implementation manner of the first aspect, the method includes:
when the user is deactivated, determining whether the user is the only user of the charging session; if yes, deactivating the charging session; if not, initiating a credit control modification request message, where the charging session modification request carries the personal identity information, so that the charging system deactivates, from the charging session, charging for the user corresponding to the personal identity information.

With reference to any one of the foregoing possible implementation manners of the first aspect, in a fourth possible implementation manner of the first aspect, the group identity is a group identity, a designated charging key, or a designated service identity.

With reference to any one of the foregoing possible implementation manners of the first aspect, in a fifth possible implementation manner of the first aspect, the charging system is any one of an online charging system, an offline charging system, and a business & operation support BOSS charging system.

According to a second aspect, a group charging method includes:
obtaining, by a charging system, a group identity and personal identity information of a user;
obtaining, by the charging system, a charging rule generated according to the group identity; and
performing, by the charging system according to the group identity and the charging rule, charging on a charging session corresponding to the group identity.

With reference to the second aspect, in a first possible implementation manner of the second aspect, the performing, by the charging system according to the group identity and the charging rule, charging on a charging session corresponding to the group identity specifically includes:
indexing, according to the group identity, account information of a group corresponding to the group identity, and performing, according to the charging rule and the account information, charging on the charging session corresponding to the group identity;
   or,
obtaining, according to the personal identity information of the user, a group identity corresponding to the personal identity information from a mapping relationship between personal identity information and a group identity, indexing, according to the group identity obtained by querying, account information of a group corresponding to the group identity, and performing, according to the charging rule and the account information, charging on the charging session corresponding to the group identity.

With reference to the second aspect, in a second possible implementation manner of the second aspect, the obtaining a group identity and personal identity information of a user includes:
obtaining the group identity and the personal identity information that are added by the user to an attach request message; or
obtaining the group identity and the personal identity information that are added by a home subscriber subscription server;
obtaining the group identity and the personal identity information that are added by a service subscription database or a group subscription database to a profile information response message; or
obtaining the group identity and the personal identity information that are added by a mobility management entity to a create session establishment request message; or
obtaining the group identity and the personal identity information that are added by a policy and charging rules function entity to an IP-CAN session establishment acknowledgement message or an IP CAN session modification acknowledgement message; or
obtaining, according to the personal identity information, the group identity configured on a mobility management entity; or
obtaining the group identity and the personal identity information that are added by an application server to an application service message.

With reference to any one of the foregoing possible implementation manners of the second aspect, in a third possible implementation manner of the second aspect, after the performing, by the charging system according to the group identity and the charging rule, charging on a charging session corresponding to the group identity, the method further includes:
generating, according to the charging rule, a group charging bill for users having a same group identity;
   or,
generating, according to the charging rule, charging bills for users in the group corresponding to the group identity, where the charging bills carry the group identity, and combining the generated charging bills into a group charging bill according to the group identity;
   or,
generating a group charging bill according to the charging rule, where the group charging bill carries the group identity.

With reference to any one of the foregoing possible implementation manners of the second aspect, in a fourth possible implementation manner of the second aspect, the group identity is a group identity, a designated charging key, a designated rating group, or a designated service identity.

With reference to any one of the foregoing possible implementation manners of the second aspect, in a fifth possible implementation manner of the second aspect, the charging system is any one of an online charging system, an offline charging system, and a BOSS charging system.

According to a third aspect, a group charging method includes:
obtaining personal identity information of a user;
obtaining a charging rule generated according to the personal identity information; and
establishing, according to the personal identity information and the charging rule, a charging session for a group account corresponding to the personal identity information, so that a charging system performs group charging according to the personal identity information and the charging rule.

With reference to the third aspect, in a first possible implementation manner of the third aspect, the obtaining personal identity information of a user includes:
obtaining the personal identity information of the user that is added by a user equipment to an attach request message; or
obtaining the personal identity information that is returned by a home subscriber subscription server; or
obtaining the personal identity information that is added by a service subscription database or a group subscription database to a profile information response message; or
obtaining the personal identity information that is added by a mobility management entity to a create session establishment request message; or
obtaining the personal identity information that is added by a policy and charging rules function entity to an IP-CAN session establishment acknowledgement message or an IP CAN session modification acknowledgement message; or
obtaining the personal identity information that is added by an application server to an application service message.

With reference to any one of the foregoing possible implementation manners of the third aspect, in a second possible implementation manner of the third aspect, the establishing, according to the personal identity information and the charging rule generated according to the personal identity information, a charging session for a group account corresponding to the group identity includes:
determining, according to the personal identity information, whether there is a charging session corresponding to the personal identity information with the charging system already; if yes, using the charging session of the personal identity information, so that multiple bearers having the personal identity information share one charging session; if not, establishing a charging session for the user according to the personal identity information.

With reference to any one of the foregoing possible implementation manners of the third aspect, in a third possible implementation manner of the third aspect, after the establishing, according to the personal identity information and the charging rule generated according to the personal identity information, a charging session for a group account corresponding to the group identity, the method includes:
when the user is deactivated, determining whether the user is the only user of the charging session; if yes, deactivating the charging session; if not, initiating a credit control modification request message, so that the charging system deactivates, from the charging session, charging corresponding to the user.

With reference to any one of the foregoing possible implementation manners of the third aspect, in a fourth possible implementation manner of the third aspect, the charging system is any one of an online charging system, an offline charging system, and a BOSS charging system.

According to a fourth aspect, a gateway device includes:
a receiver, configured to obtain a group identity and personal identity information of a user,
where the receiver is further configured to obtain a charging rule generated according to the group identity; and
a processor, configured to establish, according to the group identity, the personal identity information, and the charging rule, a charging session for a group account corresponding to the group identity, so that a charging system performs group charging according to the group identity and the charging rule.

With reference to the fourth aspect, in a first possible implementation manner of the fourth aspect, the receiver is configured to obtain the group identity and the personal identity information of the user that are added by a user equipment to an attach request message; or
the receiver is configured to obtain the group identity and the personal identity information that are returned by a home subscriber subscription server; or
the receiver is configured to obtain the group identity and the personal identity information that are added by a service subscription database or a group subscription database to a profile information response message; or
the receiver is configured to obtain the group identity and the personal identity information that are added by a mobility management entity to a create session establishment request message; or
the receiver is configured to obtain the group identity and the personal identity information that are added by a policy and charging rules function entity to an IP-CAN session establishment acknowledgement message or an IP CAN session modification acknowledgement message; or
the receiver is configured to obtain, according to the personal identity information, the group identity configured on a mobility management entity; or
the receiver is configured to obtain the group identity and the personal identity information that are added by an application server to an application service message.

With reference to the fourth aspect, in a second possible implementation manner of the fourth aspect, the device further includes a transmitter, and
the processor is configured to: when the charging rule is that one charging session is established for group users having a same group identity, determine, according to the group identity, whether there is a charging session corresponding to the group identity with the charging system already; if yes, trigger the transmitter to send a credit control modification request message to the charging system, where the credit control modification request message carries the group identity and the personal identity information of the user, so that the charging system adds the personal identity information of the user to the charging session corresponding to the group identity; if not, the processor establishes a charging session for the user according to the group identity and the personal identity information;
or,
the processor is configured to: when it is determined that the charging rule is that multiple charging sessions are established for group users having a same group identity, establish a charging session for the user according to the group identity and the personal identity information, and associate the group identity with the established charging session.

With reference to any one of the foregoing possible implementation manners of the fourth aspect, in a third possible implementation manner of the fourth aspect, the processor is further configured to: when the user is deactivated, determine whether the user is the only user of the charging session; if yes, deactivate the charging session; if not, initiate a credit control modification request message, where the charging session modification request carries the personal identity information, so that the charging system deactivates, from the charging session, charging for the user corresponding to the personal identity information.

With reference to any one of the foregoing possible implementation manners of the fourth aspect, in a fourth possible implementation manner of the fourth aspect, the group identity is a group identity, a designated charging key, or a designated service identity.

With reference to any one of the foregoing possible implementation manners of the fourth aspect, in a fifth possible implementation manner of the fourth aspect, the charging system is any one of an online charging system, an offline charging system, and a business & operation support BOSS charging system.

According to a fifth aspect, a charging device includes:
a receiver, configured to obtain a group identity and personal identity information of a user,
where the receiver is further configured to obtain a charging rule generated according to the group identity; and
a processor, configured to perform, according to the group identity and the charging rule, charging on a charging session corresponding to the group identity.

With reference to the fifth aspect, in a first possible implementation manner of the fifth aspect, the processor is configured to index, according to the group identity, account information of a group corresponding to the group identity, and perform, according to the charging rule and the account information, charging on the charging session corresponding to the group identity;
or,
the processor is configured to obtain, according to the personal identity information of the user, a group identity corresponding to the personal identity information from a mapping relationship between personal identity information and a group identity, index, according to the group identity obtained by querying, account information of a group corresponding to the group identity, and perform, according to the charging rule and the account information, charging on the charging session corresponding to the group identity.

With reference to any one of the foregoing possible implementation manners of the fifth aspect, in a second possible implementation manner of the fifth aspect, the receiver is configured to obtain the group identity and the personal identity information that are added by the user to an attach request message; or, obtain the group identity and the personal identity information that are added by a home subscriber subscription server; or, obtain the group identity and the personal identity information that are added by a service subscription database or a group subscription database to a profile information response message; or, obtain the group identity and the personal identity information that are added by a mobility management entity to a create session establishment request message; or, obtain the group identity and the personal identity information that are added by a policy and charging rules function entity to an IP-CAN session establishment acknowledgement message or an IP CAN session modification acknowledgement message; or, obtain, according to the personal identity information, the group identity configured on a mobility management entity; or, obtain the group identity and the personal identity information that are added by an application server to an application service message.

With reference to any one of the foregoing possible implementation manners of the fifth aspect, in a third possible implementation manner of the fifth aspect, the processor is further configured to generate, according to the charging rule, a group charging bill for users having a same group identity;
or,
the processor is further configured to generate, according to the charging rule, charging bills for users in the group corresponding to the group identity, where the charging bills carry the group identity, and combine the generated charging bills into a group charging bill according to the group identity;
or,
the processor is further configured to generate a group charging bill according to the charging rule, where the group charging bill carries the group identity.

With reference to any one of the foregoing possible implementation manners of the fifth aspect, in a fourth possible implementation manner of the fifth aspect, the group identity is a group identity, a designated charging key, a designated rating group, or a designated service identity.

With reference to any one of the foregoing possible implementation manners of the fifth aspect, in a fifth possible implementation manner of the fifth aspect, the charging system is any one of an online charging system, an offline charging system, and a BOSS charging system.

According to a sixth aspect, a gateway device includes:
a receiver, configured to obtain personal identity information of a user,
where the receiver is further configured to obtain a charging rule generated according to the personal identity information; and
a processor, configured to establish, according to the personal identity information and the charging rule, a charging session for a group account corresponding to the personal identity information, so that a charging system performs group charging according to the personal identity information and the charging rule.

With reference to the sixth aspect, in a first possible implementation manner of the sixth aspect, the receiver is configured to obtain the personal identity information of the user that is added by a user equipment to an attach request message; or
the receiver is configured to obtain the personal identity information that is returned by a home subscriber subscription server; or,
the receiver is configured to obtain the personal identity information that is added by a service subscription database or a group subscription database to a profile information response message; or
the receiver is configured to obtain the personal identity information that is added by a mobility management entity to a create session establishment request message; or
the receiver is configured to obtain the personal identity information that is added by a policy and charging rules function entity to an IP-CAN session establishment acknowledgement message or an IP CAN session modification acknowledgement message; or
the receiver is configured to obtain the personal identity information that is added by an application server to an application service message.

With reference to any one of the foregoing possible implementation manners of the sixth aspect, in a second possible implementation manner of the sixth aspect, the processor is configured to determine, according to the personal identity information, whether there is a charging session corresponding to the personal identity information with the charging system already; if yes, use the charging session of the personal identity information, so that multiple bearers having the personal identity information share one charging session; if not, establish a charging session for the user according to the personal identity information.

With reference to any one of the foregoing possible implementation manners of the sixth aspect, in a third possible implementation manner of the sixth aspect, the processor is further configured to: when the user is deactivated, determine whether the user is the only user of the charging session; if yes, deactivate the charging session; if not, initiate a credit control modification request message, so that the charging system deactivates, from the charging session, charging corresponding to the user.

With reference to any one of the foregoing possible implementation manners of the sixth aspect, in a fourth possible implementation manner of the sixth aspect, a charging device is any one of an online charging system, an offline charging system, and a BOSS charging system.

According to a seventh aspect, a communications system at least includes:
a gateway device, configured to obtain a group identity and personal identity information of a user; obtain a charging rule generated according to the group identity; and establish, according to the group identity, the personal identity information, and the charging rule, a charging session for a group account corresponding to the group identity, so that a charging device performs group charging according to the group identity and the charging rule; and
the charging device, configured to obtain the group identity and the personal identity information of the user; obtain the charging rule generated according to the group identity; and perform, according to the group identity and the charging rule, charging on the charging session corresponding to the group identity.

According to an eighth aspect, a communications system at least includes:
a gateway device, configured to obtain personal identity information of a user; obtain a charging rule generated according to the personal identity information; and establish, according to the personal identity information and the charging rule, a charging session for a group account corresponding to the personal identity information, so that a charging device performs group charging according to the personal identity information and the charging rule; and
the charging device, configured to obtain the personal identity information of the user; obtain the charging rule generated according to the personal identity information; and perform group charging according to the personal identity information and the charging rule.

In the group charging method, the gateway device, the charging device, and the communications system that are provided by the embodiments of the present invention, a group identity and personal identity information of a user are obtained; a charging rule generated according to the group identity is obtained; and a charging session is established, according to the group identity, the personal identity information, and the charging rule, for a group account corresponding to the group identity, so that a charging system performs group charging according to the group identity and the charging rule. By using the technical solutions provided by the present invention, it can be determined, according to a group identity of a user, that the user belongs to a certain group, and accordingly, a charging session is maintained for the user of the group. In this way, group charging can be achieved, thereby avoiding a complex signaling interaction process, and improving the charging efficiency.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a group charging method according to an embodiment of the present invention;
FIG. 2 is a flowchart of a group charging method according to an embodiment of the present invention;
FIG. 3 is a flowchart of a group charging method according to an embodiment of the present invention;
FIG. 4 is a flowchart of a group charging method according to an embodiment of the present invention;
FIG. 5 is a schematic flowchart of a specific embodiment of a group charging method according to the present invention;
FIG. 6 is a schematic flowchart of a specific embodiment of a group charging method according to the present invention;
FIG. 7 is a schematic flowchart of a specific embodiment of a group charging method according to the present invention;
FIG. 8 is a schematic flowchart of a specific embodiment of a group charging method according to the present invention;
FIG. 9 is a schematic structural diagram of a gateway device according to an embodiment of the present invention;
FIG. 10 is a schematic structural diagram of a charging device according to an embodiment of the present invention;
FIG. 11 is a schematic structural diagram of a gateway device according to an embodiment of the present invention;
FIG. 12 is a schematic structural diagram of a communications system according to an embodiment of the present invention; and
FIG. 13 is a schematic structural diagram of a communications system according to an embodiment of the present invention.

### DESCRIPTION OF EMBODIMENTS

In order to make the objectives, technical solutions, and advantages of the present invention clearer, the following further describes the embodiments of the present invention in detail with reference to the accompanying drawings.

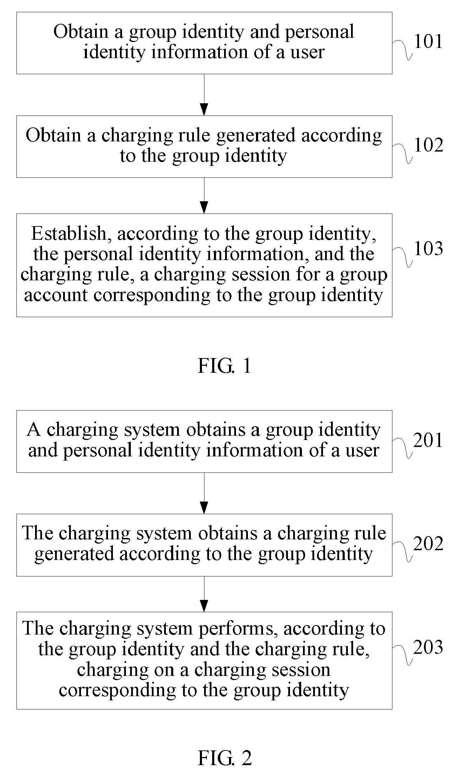

FIG. 1 is a flowchart of a group charging method according to an embodiment of the present invention. This embodiment is executed by a gateway (Gateway, hereinafter referred to as GW). Referring to FIG. 1, this embodiment includes:
101: Obtain a group identity and personal identity information of a user.
   The group identity in this embodiment may be a group user identity or a group service identity, where the group user identity is used to indicate a group to which the user belongs, and the group service identity is used to indicate a service used by the user. When multiple users have a same group user identity, the multiple users belong to one group, and when multiple users have a same group service identity, the multiple users use a same type of service.
   The personal identity information may be an international mobile subscriber identification number (International Mobile Subscriber Identification Number, hereinafter referred to as IMSI) or an international mobile equipment identity (International Mobile Equipment Identity, hereinafter referred to as IMEI) of a UE where the user is located.
102: Obtain a charging rule generated according to the group identity.
   It should be noted that, the charging rule includes a charging manner and a charging attribute, and is a part of a policy and charging control (Policy and Charging Control, hereinafter referred to as PCC) rule. Because the present invention focuses on a charging rule in the PCC rule, specific content of the PCC rule is not described in detail.
   In the embodiment of the present invention, the charging rule is generated by a PCRF according to the group identity. For users having a same group identity, charging rules carrying the same group identity may be generated. Because the users having a same group identity are users belonging to a same group or using a same group service, charging rules carrying the same group identity may be generated for the users having the same group identity, so as to instruct a charging system to perform group charging for the users having the group identity.
103: Establish, according to the group identity, the personal identity information, and the charging rule, a charging session for a group account corresponding to the group identity, so that a charging system performs group charging according to the group identity and the charging rule.

The charging session refers to a Gy session; the Gy session corresponds to a Gy reference point; the Gy reference point is used to complete online charging between a policy and charging enforcement entity (Policy and Charging Enforcement Function, hereinafter referred to as PCEF) and an online charging system (Online Charging System, hereinafter referred to as OCS); and an online charging function refers to performing real-time charging for a provided service. When a user to be charged online initiates a data service, the PCEF applies to the OCS in real time for a quota, and the OCS determines, according to user information and an amount in a user account, whether to allow the user to perform a packet data service, and delivers the user quota to the PCEF in real time. The OCS tracks usage (time or traffic) of a purchased resource by the user in real time, and deducts a current usage fee from an account balance in real time, and when funds in the account are exhausted, terminates the service or provides a relevant prompt for the user.

Further, the charging session may also refer to a Gz session; the Gz session corresponds to a Gz reference point; the Gz reference point is used to perform offline charging between a PCEF and an offline charging system (Offline Charging System, hereinafter referred to as OFCS); and an offline charging function refers to performing non-real-time charging for a provided service, where the charging may be performed after the charging session is removed.

In this embodiment, charging at least includes: credit management and charging control, and further, charging the group account further includes: performing credit pool management on account information of a group. The credit pool management refers to that a gateway makes a credit request, where the credit request carries the group identity; and the charging system performs, according to the credit request and the account information of the group corresponding to the group identity, credit pool management on the group to which the user belongs.

By applying a same charging rule for users having a same group identity, consistency of group service charging can be ensured, and during charging, charging is performed by associating the users having a same group identity with a same group account, thereby achieving group charging.

By using the technical solution provided by the present invention, it can be determined, according to a group identity of a user, that the user belongs to a certain group, and accordingly, a charging session is maintained for the user of the group. In this way, group charging can be achieved, thereby avoiding a complex signaling interaction process, and improving the charging efficiency.

Optionally, based on the technical solution of the embodiment shown in FIG. 1, step 101 "obtain a group identity and personal identity information of a user" includes any one of the following manners: obtaining the group identity and the personal identity information of the user that are added by a user equipment to an attach request message (Attach Request); or, obtaining the group identity and the personal identity information that are returned by a home subscriber subscription server; or, obtaining the group identity and the personal identity information that are added by a service subscription database or a group subscription database to a profile information response message (Profile Response); or, obtaining the group identity and the personal identity information that are added by a mobility management entity to a create session establishment request message (Create Session Request); or, obtaining the group identity and the personal identity information that are added by a policy and charging rules function entity to an IP-CAN session establishment acknowledgement message (Acknowledge IP CAN Session Establish) or an IP CAN session modification acknowledgement message (Acknowledge IP CAN Session Modification); or, obtaining, according to the personal identity information, the group identity configured on a mobility management entity; or, obtaining the group identity and the personal identity information that are added by an application server to an application service message.

Optionally, based on the technical solution of the embodiment shown in FIG. 1, step 103 "establish, according to the group identity, the personal identity information, and the charging rule generated according to the group identity, a charging session for a group account corresponding to the group identity" includes: when the charging rule is that one charging session is established for group users having a same group identity, determining, according to the group identity, whether there is a charging session corresponding to the group identity with the charging system already; if yes, sending a credit control modification request message to the charging system, where the credit control modification request message carries the group identity and the personal identity information of the user, so that the charging system adds the personal identity information of the user to the charging session corresponding to the group identity; if not, establishing a charging session for the user according to the group identity and the personal identity information; or, when it is determined that the charging rule is that multiple charging sessions are established for group users having a same group identity, establishing a charging session for the user according to the group identity and the personal identity information.

The charging session is established for the user according to the group identity and the personal identity information, so that when performing charging, the charging system can associate charging sessions having a same group identity to perform group charging.

In this embodiment, according to a difference of charging rules, any one of the following cases may exist:
(1) The charging rule is that only one charging session is established for group users having a same group identity.
   The only one charging session refers to that for multiple users having a same group identity, only one charging session is maintained for the multiple users, and personal identity information of each user is added to the charging session, so as to achieve an objective of performing group charging for multiple users of a same group. For a gateway, when establishing a charging session, the gateway sends a credit request message to a charging system, where the credit request message carries a group identity. After a charging session is established between the gateway and the charging system, the charging session is a charging session for the group identity. When it is determined, according to the charging rule, only one charging session is established for users having a same group identity, once receiving an IP-CAN session create message, the gateway determines, according to a group identity carried by the IP-CAN session create message or a group identity obtained from another message, whether a charging session corresponding to the group identity already exists between the gateway and an online charging system; if yes, sends a charging session modification request to the online charging system, where the charging session modification request carries personal identity information of a user equipment, and adds the personal identity information of the user to the charging session, so as to add information about group charging for the user; if not, that is, it is determined that no charging session corresponding to the group identity exists between the gateway and the online charging system currently and the user is currently the only charged object of the group, establishes a charging session for the user according to the group identity and the personal identity information.
   Further optionally, it may be configured that a Gy session is not established when the UE is attached, and a Gy session is established only when the UE initiates a service packet request.
(2) The charging rule is that multiple charging sessions are established for group users having a same group identity.

Multiple charging sessions refer to that charging sessions are maintained separately for multiple users that have a same group identity but have different personal identity information, where the number of sessions may be the same as the number of the users, and may also be different from the number of the users. When the number of sessions is different, the number of users that can be borne by one session may be limited. For example, one charging session can bear N users; when it is determined that the number of users currently borne by the charging session reaches N, a new charging session is established for a subsequent accessing user; when the number of users currently borne by the charging session does not reach N, a credit control modification request message may be sent to the charging system, where the credit control modification request message carries a group identity and personal identity information of the user, so that the charging system adds the personal identity information of the user to the charging session corresponding to the group identity.

It should be noted that, a specific signaling interaction process for establishing a charging session is not described herein in detail.

By using the technical solution provided by the present invention, when it is determined, according to a charging policy, that only one charging session is maintained for users having a same group identity, it can be determined, according to a group identity of a user equipment, that the user belongs to a certain group, and accordingly, only one charging session is maintained for users of the group, thereby avoiding heavy gateway load and a complex signaling interaction process that are caused by that one IP-CAN session bears multiple IP-CAN bearers, improving the charging efficiency, and reducing a network resource overhead. In addition, when it is determined, according to the charging policy, that multiple charging sessions may be maintained for users having a same group identity, it can be determined, according to a group identity of a user that, the user belongs to a certain group, and accordingly, a charging session is maintained for the user of the group. In this way, group charging can be achieved, thereby avoiding a complex signaling interaction process, and improving the charging efficiency.

Further optionally, based on the technical solution of the embodiment shown in FIG. 1, after step 103 "establish, according to the group identity, the personal identity information, and the charging rule generated according to the group identity, a charging session for a group account corresponding to the group identity", the method includes: when the user is deactivated, determining whether the user is the only user of the charging session; if yes, deactivating the charging session; if not, initiating a credit control modification request message, where the charging session modification request carries the personal identity information, so that the charging system deactivates, from the charging session, charging for the user corresponding to the personal identity information.

That a user is deactivated refers to that a user equipment is taken off-line. In order to ensure that one user among group users is taken off-line or quits does not affect charging for other users, when a user is deactivated, it is determined whether the user is the only user of a charging session; if yes, the charging session is deactivated, and the deactivating does not affect charging for the other users; if not, a charging session modification request is initiated, where the charging session modification request carries the personal identity information, so that the charging system deactivates, from the charging session, the user corresponding to the personal identity information. In this case, only the charging for the user is removed from the charging session without affecting charging for the other users, thereby ensuring that charging for group users is performed normally.

By using the technical solution provided by the present invention, it can be determined, according to a group identity of a user, that the user belongs to a certain group, and accordingly, only one charging session is maintained for users of the group, thereby avoiding heavy gateway load and a complex signaling interaction process that are caused by that one IP-CAN session bears multiple IP-CAN bearers, improving the charging efficiency, and reducing a network resource overhead. Further, when a user is deactivated, users of a group currently corresponding to the charging session are determined, so that deactivation of the user does not affect charging for the other users in the group.

Optionally, based on the technical solution of the embodiment shown in FIG. 1, the group identity is a group identity, a designated charging key (Charging key or Rating group), or a designated service identity (Service identity, used to identify a special group service).

Optionally, based on the technical solution of the embodiment shown in FIG. 1, the charging system is any one of an online charging system, an offline charging system, and a business & operation support BOSS charging system. A BOSS (Business & Operation Support System, business & operation support system) is usually divided into four parts: a charging and settlement system, an operation and accounting system, a customer service system, and a decision support system. Viewed from a service level, the BOSS is a framework that bears a service system, a CRM (Customer Relationship Management, customer relationship management) system, and a charging system.

FIG. 2 is a flowchart of a group charging method according to an embodiment of the present invention. Referring to FIG. 1, this embodiment includes:
201: A charging system obtains a group identity and personal identity information of a user.

In the embodiment of the present invention, the charging system may be an online charging system or an offline charging system, which may not be limited herein.
202: The charging system obtains a charging rule generated according to the group identity.

In the embodiment of the present invention, the charging rule is generated by a PCRF or a charging rule generating apparatus according to the group identity.
203: The charging system performs, according to the group identity and the charging rule, charging on a charging session corresponding to the group identity.

It should be noted that, there may be one or more charging sessions in step 203, and for all users having a same group identity, group charging is performed according to the group identity and a corresponding charging rule. By applying a same charging rule to users having a same group identity, consistency of group service charging can be ensured, and during charging, charging is performed by associating users having a same group identity with a same group account, thereby achieving group charging.

In this embodiment, charging at least includes: credit management and charging control, and further, charging the group account further includes: performing credit pool management on account information of a group. The credit pool management refers to that a gateway makes a credit request, where the credit request carries the group identity; and the charging system performs, according to the credit request and the account information of the group corresponding to the group identity, credit pool management on the group in which the user is located.

By using the technical solution provided by the present invention, it can be determined, according to a group identity of a user, that the user belongs to a certain group, and accordingly, group charging is performed for the user by using a charging session. In this way, group charging can be achieved, thereby avoiding a complex signaling interaction process, and improving the charging efficiency.

Optionally, based on the technical solution of the embodiment shown in FIG. 2, step 203 "the charging system performs, according to the group identity and the charging rule, charging on a charging session corresponding to the group identity" specifically includes any one of the following steps:
203a: Index, according to the group identity, account information of a group corresponding to the group identity, and perform, according to the charging rule and the account information, charging on the charging session corresponding to the group identity.

For users using a group service, that is, users having a same group identity, the charging system maintains a piece of account information for the users, and the group identity serves as an index for the account information. When charging is performed for users belonging to a same group, a gateway sends a credit request message to the charging system, where the credit request message carries a group identity; and the charging system indexes, according to the group identity of the user, the account information of the group corresponding to the group identity, and performs credit management and charging control on the user according to the charging rule and the account information.
203b: Obtain, according to the personal identity information of the user, a group identity corresponding to the personal identity information from a mapping relationship between personal identity information and a group identity, index, according to the group identity obtained by querying, account information of a group corresponding to the group identity, and perform, according to the charging rule and the account information, charging on the charging session corresponding to the group identity.

The charging system may further maintain the mapping relationship between personal identity information and a group identity, so that the group of the user can also be learned according to received personal identity information. Therefore, the group identity corresponding to the personal identity information is obtained from the mapping relationship between personal identity information and a group identity, the account information of the group corresponding to the group identity is indexed according to the group identity obtained by querying, and group management and credit control are performed on the user according to the charging rule and the account information.

Optionally, based on the technical solution of the embodiment shown in FIG. 2, step 201 "obtain a group identity and personal identity information of a user" includes: obtaining the group identity and the personal identity information that are added by the user to an attach request message; or, obtaining the group identity and the personal identity information that are added by a home subscriber subscription server; or, obtaining the group identity and the personal identity information that are added by a service subscription database or a group subscription database to a profile information response message; or, obtaining the group identity and the personal identity information that are added by a mobility management entity to a create session establishment request message; or, obtaining the group identity and the personal identity information that are added by a policy and charging rules function entity to an IP-CAN session establishment acknowledgement message or an IP CAN session modification acknowledgement message; or, obtaining, according to the personal identity information, the group identity configured on a mobility management entity; or, obtaining the group identity and the personal identity information that are added by an application server to an application service message.

Optionally, based on the technical solution of the embodiment shown in FIG. 2, after step 203 "the charging system performs, according to the group identity and the charging rule, charging on a charging session corresponding to the group identity", the method includes any one of the following steps:
204a: Generate, according to the charging rule, a group charging bill for users having a same group identity.

The group charging bill at least includes expenditures of the users having a same group identity, that is, one group charging bill is generated for multiple users.
204b: Generate, according to the charging rule, charging bills for users in the group corresponding to the group identity, where the charging bills carry the group identity, and combine the generated charging bills into a group charging bill according to the group identity.

A bill may be generated for each user separately, and the bill carries the group identity. Accordingly, the bills of the users in the group are combined, according to the group identity, to obtain a group charging bill.
204c: Generate a group charging bill according to the charging rule, where the group charging bill carries the group identity.

The group charging bill at least includes expenditures of users having a same group identity, that is, a group charging bill is generated for multiple users, and when the bill is sent, the group charging bill is identified by using the group identity, so that the gateway learns that the bill is a group charging bill, and combines bills according to the group identity.

Optionally, based on the technical solution of the embodiment shown in FIG. 2, the group identity is a group identity, a designated charging key, a designated rating group (Rating Group), or a designated service identity.

Optionally, based on the technical solution of the embodiment shown in FIG. 2, the charging system is any one of an online charging system, an offline charging system, and a business & operation support BOSS charging system.

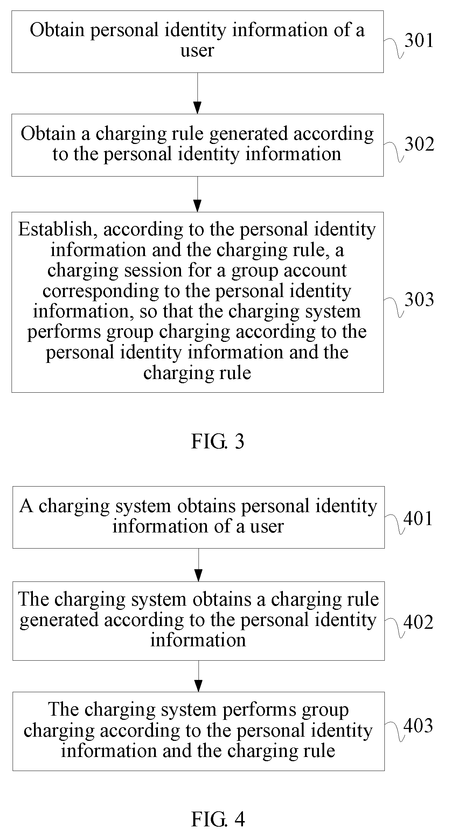

FIG. 3 is a flowchart of a group charging method according to an embodiment of the present invention. This embodiment is executed by a GW. Referring to FIG. 3, this embodiment includes:
301: Obtain personal identity information of a user.

For some services, users having same personal identity information may be regarded as users of a same group, that is, personal identity information of a user is used as a group identity, and the personal identity information of the user is used to indicate the group to which the user belongs or a service used by the user.
302: Obtain a charging rule generated according to the personal identity information.

In the embodiment of the present invention, the charging rule is generated by a PCRF according to the personal identity information, and for users having same personal identity information, charging rules carrying the same personal identity information may be generated. Because users having same personal identity information are users belonging to a same group or using a same group service, charging rules carrying the same personal identity information may be generated for the users having the same personal identity information, so as to instruct a charging system to perform group charging for the users having the personal identity information.
303: Establish, according to the personal identity information and the charging rule, a charging session for a group account corresponding to the personal identity information, so that the charging system performs group charging according to the personal identity information and the charging rule.

By applying a same charging rule to users having a same piece of personal identity information, consistency of group service charging can be ensured, and during charging, charging is performed by associating users having same personal identity information with a same group account, and charging may also be performed by associating charging for multiple services having same personal identity information with a same group account, thereby achieving group charging, and also achieving group charging for different services.

Optionally, based on the technical solution of the embodiment shown in FIG. 3, step 301 "obtain personal identity information of a user" includes: obtaining the personal identity information that is added by a user equipment to an attach request message; or, obtaining the personal identity information that is returned by a home subscriber subscription server; or, obtaining the personal identity information that is added by a service subscription database or a group subscription database to a profile information response message; or, obtaining the personal identity information that is added by a mobility management entity to a create session establishment request message; or, obtaining the personal identity information that is added by a policy and charging rules function entity to an IP-CAN session establishment acknowledgement message or an IP CAN session modification acknowledgement message; or, obtaining the personal identity information that is added by an application server to an application service message.

Optionally, based on the technical solution of the embodiment shown in FIG. 3, step 303 "establish, according to the personal identity information and the charging rule generated according to the personal identity information, a charging session for a group account corresponding to the personal identity information" includes: determining, according to the personal identity information, whether there is a charging session corresponding to the personal identity information with the charging system already; if yes, using the charging session of the personal identity information, so that multiple bearers having the personal identity information share one charging session; if not, establishing a charging session for the user according to the personal identity information.

For users having same personal identity information, in order to enable the charging system to perform charging for the users by using only one charging session, a gateway maintains only one charging session for multiple bearers corresponding to one user, the charging session may correspond to multiple bearers, and the charging system side can perform group charging for users having same personal identity information according to only one charging session, which reduces gateway load and a signaling overhead when compared with the prior art in which one IP-CAN bearer corresponds to one charging session.

The "using the charging session of the personal identity information" in step 303 includes: adding a bearer identity of a user to information about the charging session of the personal identity information, so that multiple bearers having the personal identity information share one charging session.

Each bearer has a bearer identity, and therefore, by adding a bearer identity of a user to information about an existing charging session, the bearer of the user can be associated with the charging session, so that one charging session can correspond to multiple bearers.

The "establishing a charging session for the user according to the personal identity information" in step 303 includes: associating the personal identity information with an identity of the established charging session, and adding the bearer identity of the user to information about the established charging session. In order to associate the charging session with a currently established bearer to maintain one charging session for multiple bearers corresponding to one user, the personal identity information is associated with the identity of the charging session during establishment.

Optionally, based on the technical solution of the embodiment shown in FIG. 3, after step 303 "establish, according to the personal identity information and the charging rule generated according to the personal identity information, a charging session for a group account corresponding to the personal identity information", the method includes:
when the user is deactivated, determining whether the user is the only user of the charging session; if yes, deactivating the charging session; if not, initiating a credit control modification request message, so that the charging system deactivates, from the charging session, charging corresponding to the user.

By using the technical solution provided by the present invention, it can be determined, according to personal identity information of a user, that the user belongs to a certain group, and accordingly, a charging session is maintained for the user of the group. In this way, group charging can be achieved, thereby avoiding a complex signaling interaction process, and improving the charging efficiency.

Optionally, based on the technical solution of the embodiment shown in FIG. 3, the charging system is any one of an online charging system, an offline charging system, and a business & operation support BOSS charging system.

FIG. 4 is a flowchart of a group charging method according to an embodiment of the present invention. This embodiment is executed by a charging system. Referring to FIG. 4, this embodiment includes:
401: A charging system obtains personal identity information of a user.

In the embodiment of the present invention, the charging system may be an online charging system or an offline charging system, which may not be limited.
402: The charging system obtains a charging rule generated according to the personal identity information.

In the embodiment of the present invention, the charging rule is generated by a PCRF or a charging rule generating apparatus according to the group identity.
403: The charging system performs group charging according to the personal identity information and the charging rule.

It should be noted that, there is one charging sessions in step 403, and for all users having same personal identity information, group charging is performed according to the personal identity information and a corresponding charging rule. By applying a same charging rule to users having same personal identity information, consistency of group service charging can be ensured, and during charging, charging is performed by associating users having same personal identity information with a same group account, thereby achieving group charging.

In this embodiment, charging at least includes: credit management and charging control, and further, charging the group account further includes: performing credit pool management on account information of a group. The credit pool management refers to that a gateway makes a credit request, where the credit request carries the group identity; and the charging system performs, according to the credit request and the account information of the group corresponding to the personal identity information, credit pool management on the group to which the user belongs.

By using the technical solution provided by the present invention, it can be determined, according to personal identity information of a user, that the user belongs to a certain group, and accordingly, group charging is performed for the user by using a charging session. In this way, group charging can be achieved, thereby avoiding a complex signaling interaction process, and improving the charging efficiency.

Optionally, based on the technical solution of the embodiment shown in FIG. 4, step 403 "the charging system performs group charging according to the personal identity information and the charging rule" specifically includes: indexing, according to the personal identity information, account information of a group corresponding to the personal identity information, and performing group charging for the user according to the charging rule and the account information.

For users using a group service, that is, users having same personal identity information, the charging system maintains a piece of account information for the users, and the personal identity information serves as an index of the account information. When charging is performed for users belonging to a same group, a gateway sends a credit request message to the charging system, where the credit request message carries personal identity information; and the charging system indexes, according to the personal identity information of the user, the account information of the group corresponding to the personal identity information, and performs credit management and charging control on the user according to the charging rule and the account information.

Optionally, based on the technical solution of the embodiment shown in FIG. 4, step 401 "obtain personal identity information of a user" includes: obtaining the personal identity information that is added by a user equipment to an attach request message; or, obtaining the personal identity information that is returned by a home subscriber subscription server; or, obtaining the personal identity information that is added by a service subscription database or a group subscription database to a profile information response message; or, obtaining the personal identity information that is added by a mobility management entity to a create session establishment request message; or, obtaining the personal identity information that is added by a policy and charging rules function entity to an IP-CAN session establishment acknowledgement message or an IP CAN session modification acknowledgement message; or, obtaining the personal identity information that is added by an application server to an application service message.

Optionally, based on the technical solution of the embodiment shown in FIG. 4, after step 403 "the charging system performs group charging according to the personal identity information and the charging rule", the method includes any one of the following steps:
404a: Generate, according to the charging rule, a group charging bill for users having same personal identity information.

The group charging bill at least includes expenditures of users having same personal identity information, that is, one group charging bill is generated for multiple users.
404b: Generate, according to the charging rule, charging bills for users in the group corresponding to the personal identity information, where the charging bills carry the group identity, and combine the generated charging bills into a group charging bill according to the personal identity information.

A bill may be generated for each user separately, and the bill carries the personal identity information; accordingly, the bills of the users in the group are combined, according to the personal identity information, to obtain a group charging bill.
404c: Generate a group charging bill according to the charging rule, where the group charging bill carries the personal identity information.

The group charging bill at least includes expenditures of users having same personal identity information, that is, a group charging bill is generated for multiple users, and when the bill is sent, the group charging bill is identified by using the personal identity information, so that the gateway learns that the bill is a group charging bill, and combines bills according to the personal identity information.

A core network of a wireless evolved network mainly includes three logical functional entities, namely, an MME, an SGW, and a PGW. The MME is responsible for NAS signaling, NAS signaling encryption, and roaming and tracking functions, allocates a temporary personal identity to a user, and is responsible for a security function, and so on. The SGW is responsible for a local mobility anchor, a mobility anchor inside a 3GPP system, and lawful interception of relevant information. The PGW is responsible for policy enforcement, charging, and lawful interception of relevant functions. In this embodiment, that interacting bodies include a user equipment (User Equipment, hereinafter referred to as UE), an evolved base station (eNode B, hereinafter referred to as eNB), an MME, an SGW, a PGW, a PCRF, a home subscriber server (Home Subscriber Server, hereinafter referred to as HSS)/a subscription profile repository (Subscription Profile Repository, hereinafter referred to as SPR), a user data repository (User Data Repository, hereinafter referred to as UDR), and an OCS is used as an example for description.

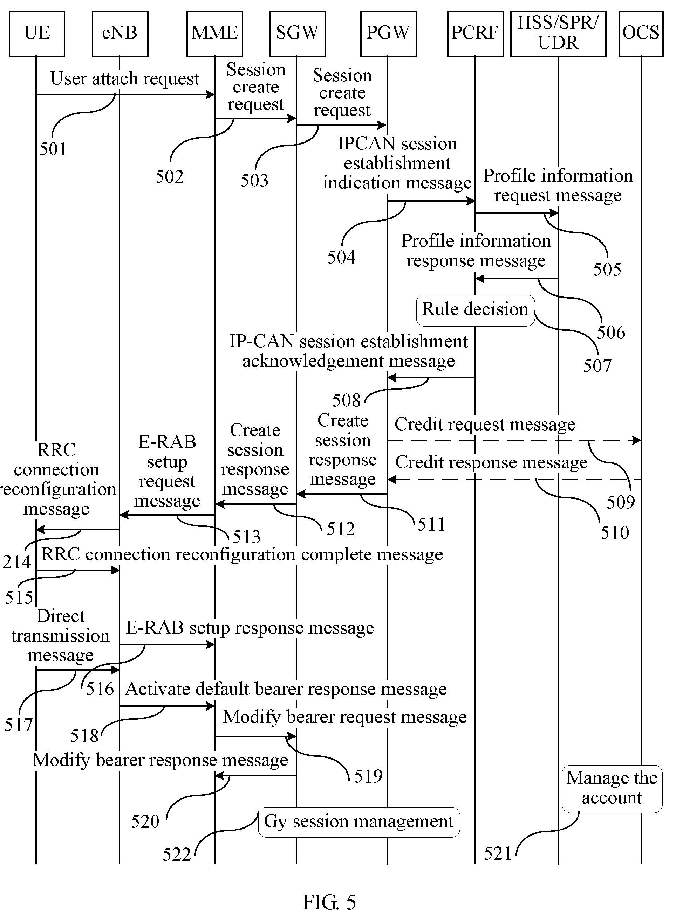

FIG. 5 is a schematic flowchart of a specific embodiment of a group charging method according to the present invention. In this embodiment, that it is determined, according to a charging rule, that only one charging session for users having a same group identity is maintained is used as an example for description. Referring to FIG. 5, this specific embodiment includes the following steps:
501: A UE initiates a user attach request message to a network, and an eNB receives the attach request message of the UE, and sends the attach request message to a corresponding MME, where the attach request message carries personal identity information of the UE.

Optionally, the attach request message carries the personal identity information of the UE and a mobile phone number of a user. The personal identity information may be an international mobile subscriber identification number (International Mobile Subscriber Identification Number, hereinafter referred to as IMSI) or an international mobile equipment identity (International Mobile Equipment Identity, hereinafter referred to as IMEI) of the UE.

In addition, the attach request message may further carry a group identity of the UE, and the group identity may be a group user identity or a group service identity.
502: The MME selects an SGW for the UE, and sends a session create request to the SGW, where the session create request carries the personal identity information of the UE.

Optionally, before step 502, the method may include:
the MME sends an update location area request message (Update Location Request) to an HSS or a group subscription database, where if the MME obtains the group identity of the UE from the attach request message, the update location area request message carries the group identity.

Further optionally, the HSS or the group subscription database returns an update location area acknowledgement message (Update Location Acknowledge) to the UE, where the HSS or the group subscription database adds subscription information to the update location area acknowledgement message. Optionally, the update location area acknowledgement message includes the group identity, or the subscription information includes the group identity, so as to indicate group charging.

Still further optionally, if the MME obtains the group identity of the UE from an HSS/SPR/UDR, the session create request carries the group identity of the UE.

It can be known by a person skilled in the art that a process of selecting an SGW by the MME has been disclosed in the prior art, which is not repeatedly described herein.
503: The SGW sends a session create request to a corresponding PGW, where the session create request carries the personal identity information of the UE.

Optionally, if the SGW obtains the group identity of the UE in step 502, the session create request carries the group identity of the UE.

It can be known by a person skilled in the art that SGWs correspond to PGWs in a one-to-one manner, that is, each SGW corresponds to one PGW.
504: When a dynamic PCC rule is configured on the PGW, the PGW sends an IP-CAN session establishment indication message to a PCRF, where the IP-CAN session establishment indication message carries the personal identity information of the UE.

Optionally, if the PGW obtains the group identity of the UE in step 503, the IP-CAN session establishment indication message carries the group identity of the UE.

For the PGW, a static PCC rule or a dynamic PCC rule may be configured on the PGW, but in this embodiment, only that a dynamic PCC rule is configured on the PGW is used as an example for description.

In another embodiment, when a static PCC rule is configured on the PGW, proceed to step 509 directly.
505: When the PCRF does not store policy information of the UE, the PCRF sends a subscription policy request message to the /SPR/UDR, where the subscription policy request message carries the personal identity information of the UE.

Specifically, when receiving the IP-CAN session establishment indication message, the PCRF determines, according to the personal identity information of the UE, whether the PCRF stores the policy information of the UE; if yes, steps 505 to 508 do not need to be performed, the group identity corresponding to the personal identity information is obtained from the subscription information according to the personal identity information of the UE, and in step 508, the group identity is added to an IP-CAN session establishment acknowledgement message and sent to the PGW; if not, subscribed policy information of the UE needs to be obtained from the HSS/SPR/UDR.

Optionally, the PCRF obtains the group identity of the user equipment locally. Specifically, the PCRF may be locally configured with a correspondence between personal identity information and a group identity, so that according to the received personal identity information, a group identity, such as a group user identity or a group service identity, corresponding to the personal identity information is obtained.
506: The SPR/UDR determines, according to the personal identity information of the UE, whether there is a group identity corresponding to the personal identity information of the UE; if yes, returns a profile information response message to the PCRF, where the profile information response message carries service information, the subscription information, and the group identity of the UE.

When receiving a profile request message, the SPR/UDR determines, according to the personal identity information of the UE, whether there is a group identity corresponding to the personal identity information of the UE; if yes, determines that the UE is a group user, and returns a profile information response message to the PCRF, where the profile information response message carries service information, the subscription information, and the group identity of the UE.

In this embodiment, only that the UE is a group user is used as an example for description. As the UE is a group user, the personal identity information of the UE and a group identity corresponding to the UE are stored in the HSS/SPR/UDR.

Further, if there is no group identity corresponding to the personal identity information of the UE, it is determined that the UE is not a group user, and a profile information response message is returned to the PCRF, where the profile information response message carries service information and the subscription information of the UE.
507: The PCRF makes, according to the subscription information, the service information, and the group identity, a rule decision to generate a PCC rule for the user, where the PCC rule includes the group identity and a charging rule.

In order to perform credit management and charging control during group charging, the group identity may be an independent group identity, may also use a special charging key (Charging key or Rating group), and may also be a special service identity (Service Identity, used to identify a special group service).

Specifically, the PCRF receives the group identity sent by the HSS/SPR/UDR. When the group identity is a group user identity, the group user identity is carried in the PCC rule when the PCRF generates the PCC rule, so as to indicate that the user performs group policy control; or, the PCRF receives the group identity sent by the HSS/SPR/UDR, and when the group identity is a group service identity, the group service identity is carried in the PCC rule when the PCRF generates the PCC rule, so as to indicate that the user may perform group charging management together with other users using a same type of service.
508: The PCRF returns an IP-CAN session establishment acknowledgement message (Acknowledge IP CAN Session Establishment) to the PGW, where the IP-CAN session establishment acknowledgement message carries the PCC rule, and the PCC rule carries the group identity of the UE.
509: The PGW installs and executes the PCC rule from the PCRF, determines, according to the group identity, whether there is a charging session corresponding to the group identity with an online charging system already; if yes, sends a charging session modification request to the online charging system, and adds the personal identity information of the user equipment to the charging session; if not, establishes a charging session for the user according to the group identity and the personal identity information.

The charging session is preferably a Gy session.

In step 509, the PGW determines whether a charging session corresponding to the group identity already exists between the PGW and the OCS, so as to determine whether the user is a user that is activated for the first time among users in a group corresponding to the group identity. When a charging session corresponding to the group identity already exists between the PGW and the OCS, it indicates that the user is not a user that is activated for the first time among the users in the group corresponding to the group identity. In order to maintain only one charging session for the users in the group, the PGW sends a charging session modification request to the OCS, and adds information about group charging for the user. When no charging session corresponding to the group identity exists between the PGW and the OCS, it indicates that the user is a user that is activated for the first time among the users in the group corresponding to the group identity, and a charging session is established for the user.

It should be noted that, it can be learned according to the embodiment shown in FIG. 3 that the personal identity information may be regarded as one type of group identity, one charging session is maintained for users having same personal identity information, and a specific process of performing group charging by using the personal identity information as the group identity is similar to the process of performing group charging according to the group identity.

Further optionally, in step 509, it is determined, according to the personal identity information, whether there is a charging session corresponding to the personal identity information with the charging system already; if yes, only one charging session is established for multiple bearers under the user, so as to maintain the only one charging session for the personal identity information; if not, a charging session is established for the user according to the personal identity information.

It can be known by a person skilled in the art that, a charging session establishment request and the charging session modification request in step 509 both are a type of credit request message, which is not repeatedly described herein.

Optionally, in another embodiment, it may be configured that a charging session is not established when the UE is attached, and a charging session is established only when the UE initiates a service packet request.

When group charging is used for the user equipment, the OCS allocates a corresponding quota to the user according to account information of the group, and sends the quota to the PGW.

Optionally, the PGW may establish a one-to-one corresponding charging session for an IP-CAN session of the user, and the PGW or the OCS associates charging sessions of the group users according to the group user identity or the group service identity, and performs credit management of a Credit POOL in the associated charging sessions.

Further, when an offline charging application is used, the PGW may generate an offline charging bill, and adds the group identity to the offline charging bill.

510: The OCS returns a credit response message (Credit Response).
511: The PGW sends a create session response message to the SGW, where the message includes the charging rule obtained by the PGW
512: The SGW sends the create session response message to the MME.

Optionally, the SGW generates a charging bill according to the charging rule.
513: The MME sends an E-RAB setup request message to the eNodeB, where the message carries an activate default bearer request message sent to the MME.
514: The eNodeB sends an RRC connection reconfiguration message to the UE.
515: The UE returns an RRC connection reconfiguration complete message to the eNodeB.
516: The eNodeB sends an E-RAB setup response message to the MME.
517: The UE sends a direct transmission message to the eNodeB, where the message carries an activate default bearer response message.
518: The eNodeB transfers the activate default bearer response message to the MME.
519: The MME sends a modify bearer request message to the SGW
520: The SGW returns a modify bearer response message to the PGW
521: The OCS indexes, according to the group identity, the account information of the group corresponding to the group identity, and performs, according to the charging rule and the account information, credit management and charging control on the user.

Optionally, when the group identity is a group user identity, the OCS may maintain one piece of account information of the group for all users in the group corresponding to the group user identity, and the OCS performs credit management and charging control according to the account information; and when the group identity is a group service identity, the OCS may maintain one piece of account information for multiple users using a service corresponding to the group service identity, and the OCS performs credit management and charging control according to group charging account information of the service.
522: When the user is deactivated, the PGW performs charging session management according to the previously received group identity.

Specifically, when the user equipment is deactivated, it is determined whether the user equipment is the only user of the charging session (that is, a user of a charging session that is the last one to be deactivated in the group); if yes, the charging session is deactivated; if not, a charging session modification request is initiated, where the charging session modification request carries the personal identity information, so that the charging system deactivates, from the charging session, charging for the user equipment corresponding to the personal identity information.

The charging session management includes but is not limited to any one of the following steps: generating, according to the charging rule, a group charging bill for users having a same group identity; or, generating, according to the charging rule, charging bills for users in the group corresponding to the group identity, where the charging bills carry the group identity, and combining the generated charging bills into a group charging bill according to the group identity; or, generating a group charging bill according to the charging rule, where the group charging bill carries the group identity.

In addition, a charging gateway, such as the PGW/SGW, may generate an offline charging bill for the user. Optionally, when the PGW/SGW obtains a group identity, such as a group user identity or a group service identity, of a user, the generated offline charging bill carries the group identity, and an offline charging system performs bill combination and account management according to the group identity.

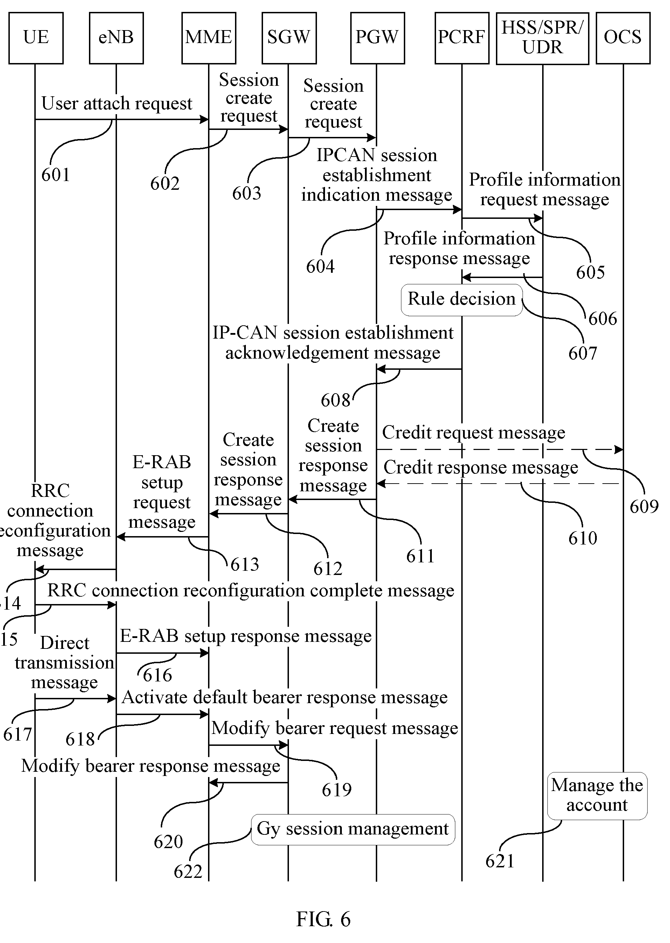

FIG. 6 is a schematic flowchart of a specific embodiment of a group charging method according to the present invention. In this embodiment, description is provided by using an example in which it is determined according to a charging rule to maintain multiple charging sessions for users having a same group identity. Referring to FIG. 6, this specific embodiment includes the following steps:
601: A UE initiates a user attach request message to a network, and an eNB receives the attach request message of the UE, and sends the attach request message to a corresponding MME, where the attach request message carries personal identity information of the UE.
602: The MME selects an SGW for the UE, and sends a session create request to the SGW, where the session create request carries the personal identity information of the UE.
603: The SGW sends a session create request to a corresponding PGW, where the session create request carries the personal identity information of the UE.
604: When a dynamic PCC rule is configured on the PGW, the PGW sends an IP-CAN session establishment indication message to a PCRF, where the IP-CAN session establishment indication message carries the personal identity information of the UE.
605: When the PCRF does not store policy information of the UE, the PCRF sends a subscription policy request message to an /SPR/UDR, where the subscription policy request message carries the personal identity information of the UE.
606: The SPR/UDR determines according to the personal identity information of the UE whether there is a group identity corresponding to the personal identity information of the UE; if yes, returns a profile information response message to the PCRF, where the profile information response message carries service information, the subscription information, and the group identity of the UE.
607: The PCRF makes a rule decision according to the subscription information, the service information, and the group identity, to generate a PCC rule for the user, where the PCC rule includes the group identity and a charging rule.
608: The PCRF returns an IP-CAN session establishment acknowledgement message (Acknowledge IP CAN Session Establishment) to the PGW, where the IP-CAN session establishment acknowledgement message carries the PCC rule, and the PCC rule carries the group identity of the UE.
609: The PGW installs and executes the PCC rule from the PCRF, and establishes a charging session for the user according to the group identity and the personal identity information.

In the embodiment of the present invention, establishing a charging session refers to establishing a separate charging session for a user, where the charging session is used to perform charging for a service corresponding to the service information of the user, so that in step 621, the charging system can index, according to the group identity, information about the group account corresponding to the group identity, so as to perform group charging for the service of the user.
610: The OCS returns a credit response message (Credit Response).
611: The PGW sends a create session response message to the SGW, where the message includes the charging rule obtained by the PGW
612: The SGW sends the create session response message to the MME.
613: The MME sends an E-RAB setup request message to the eNodeB, where the message carries an activate default bearer request message sent to the MME.
614: The eNodeB sends an RRC connection reconfiguration message to the UE.
615: The UE returns an RRC connection reconfiguration complete message to the eNodeB.
616: The eNodeB sends an E-RAB setup response message to the MME.
617: The UE sends a direct transmission message to the eNodeB, where the message carries an activate default bearer response message.
618: The eNodeB transfers the activate default bearer response message to the MME.
619: The MME sends a modify bearer request message to the SGW.
620: The SGW returns a modify bearer response message to the PGW.
621: The OCS indexes, according to the group identity, the account information of the group corresponding to the group identity, and performs, according to the charging rule and the account information, credit management and charging control on the user.
622: When the user is deactivated, the PGW performs charging session management according to the previously received group identity.

The charging session management includes but is not limited to any one of the following steps: generating, according to the charging rule, a group charging bill for users having a same group identity; or, generating, according to the charging rule, charging bills for users in a group corresponding to the group identity, where the charging bills carry the group identity, and combining the generated charging bills into a group charging bill according to the group identity; or, generating a group charging bill according to the charging rule, where the group charging bill carries the group identity.

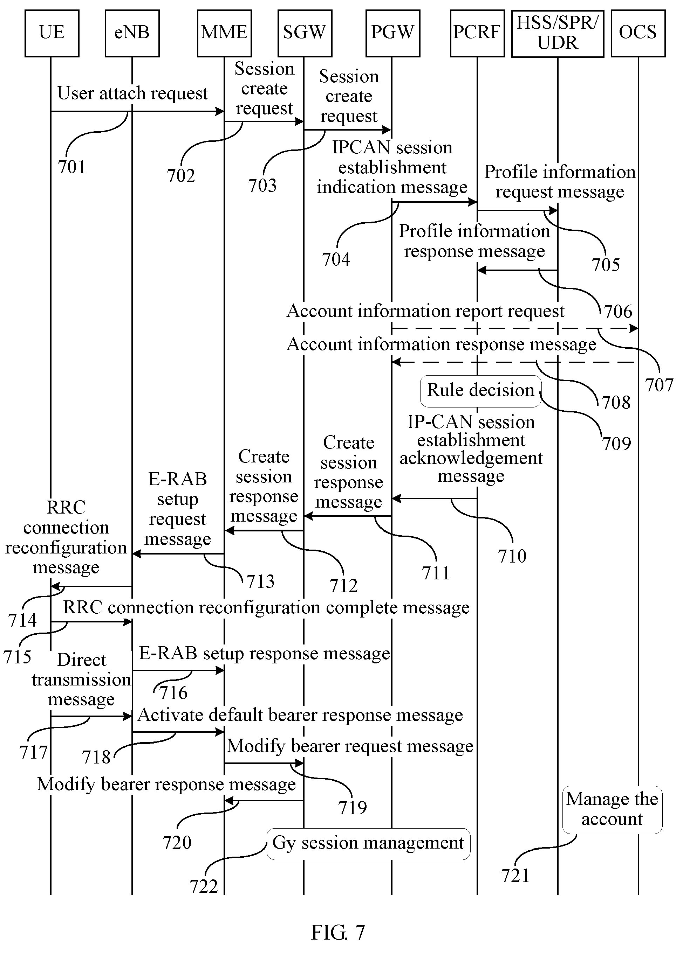

FIG. 7 is a schematic flowchart of a specific embodiment of a group charging method according to the present invention. Referring to FIG. 7, this specific embodiment includes the following steps:

Steps 701 to 705 are similar to steps 501 to 505, and the details are not repeatedly described.
706: The HSS/SPR/UDR determines, according to the personal identity information of the UE, whether there is a group identity corresponding to the personal identity information of the UE; if yes, returns a profile information response message to the PCRF, where the profile information response message carries service information, the subscription information, and the group identity of the UE.

Specifically, when receiving an IP-CAN session establishment indication message, the PCRF determines, according to the personal identity information of the UE, whether the PCRF stores the subscription information of the UE; if yes, steps 705 to 708 do not need to be performed, the group identity corresponding to the personal identity information is obtained from the subscription information according to the personal identity information of the UE, and in step 708, the group identity is added to an IP-CAN session establishment acknowledgement message and sent to the PGW; if not, the subscription information of the UE needs to be obtained from the HSS/SPR/UDR.

Optionally, the PCRF obtains the group identity of the user equipment locally. Specifically, the PCRF may be locally configured with a correspondence between personal identity information and a group identity, so that according to the received personal identity information, a group identity, such as personal identity information or a group service identity, corresponding to the personal identity information is obtained.
707: The PCRF sends a user account information report request to the OCS, where the user account information report request carries the group identity.

Specifically, the PCRF sends the user account information report request to the OCS through an Sy reference point (an interface between the PCRF and the OCS), where the user account information report request carries the group identity, so as to indicate that the user adopts group control.

When making a rule decision according to the subscription information, the service information, and the group identity, the PCRF needs to make the rule decision according to QoS and gating corresponding to the decision. Therefore, before the rule decision is made, user account information of the user in the OCS needs to be obtained, and therefore, the user account information needs to be requested from the OCS.
708: The OCS obtains, according to the received group identity and according to the group identity, account information corresponding to the group identity, and sends an account information response message to the PCRF, where the account information response message carries the user account information corresponding to the group identity.

Specifically, the OCS obtains, according to the received group identity, the account information corresponding to the group identity.

In another embodiment, a mapping relationship between personal identity information (for example, an IMSI) and a group identity or a group account may be maintained in the OCS. Therefore, in step 707, when the PCRF sends the user account information report request to the OCS, the user account information report request may carry only personal identity information (for example, an IMSI or an IMEI), and the OCS may obtain a group account or Credit Pool information corresponding to the user by querying according to the personal identity information. Correspondingly, step 708 includes: obtaining, by the OCS according to the personal identity information of the user equipment, the group identity corresponding to the personal identity information from the mapping relationship between the personal identity information and the group identity, indexing, according to the group identity obtained by querying, the account information of the group corresponding to the group identity, and performing group management and credit control on the user equipment according to the charging rule and the account information.

The OCS sends an account information response message carrying the obtained account information to the PCRF.

It can be known by a person skilled in the art that, a credit pool (Credit POOL) technology cannot be applied to multiple charging sessions currently. As a result, services and group users belonging to different bearers in one IP-CAN session cannot share a credit pool, which leads to an increase in the amount of signaling between an OCS and a gateway, and results in a network congestion problem. However, in the embodiment of the present invention, one IP-CAN session is maintained for multiple users of a same group, which makes it possible to share a credit pool, thereby further improving the network congestion problem.
709: The PCRF makes a rule decision according to the subscription information, the service information, and the group identity, and generates a PCC rule for the user, where the PCC rule includes the group identity, QoS control of the user, and a charging rule.
710: The PCRF returns an IP-CAN session establishment acknowledgement message (Acknowledge IP CAN Session Establishment) to the PGW, where the IP-CAN session establishment acknowledgement message carries the group identity.

Steps 711 to 721 are similar to steps 511 to 521, which are not repeatedly described herein.

In the method provided by this embodiment, when online charging is performed for a user, a PCRF sends a group identity to an OCS, so that when performing functions of credit management and quota allocation, the OCS maintains, according to the group identity, that the user shares account information of a corresponding group of the user, or, the user and other users in the group use a same credit pool. Therefore, a problem that an existing credit pool technology cannot be shared by different services and group users borne by a same IP-CAN session is solved, and the amount of signaling between an OCS and a PGW is reduced. In addition, a management problem that multiple users cannot share a quota due to excessively detailed credit management by the OCS and the PGW is eliminated.

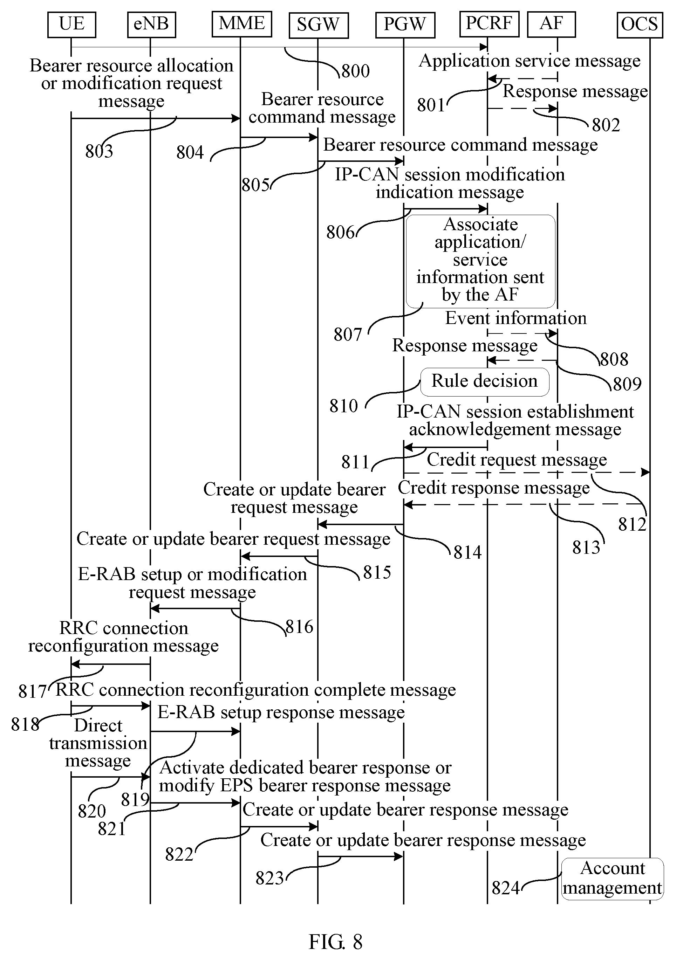

FIG. 8 is a schematic flowchart of a specific embodiment of a group charging method according to the present invention. A network architecture of FIG. 8 further includes an AF. Referring to FIG. 8, this specific embodiment includes the following steps:
800: A UE sends a signaling control protocol (Session Initiation Protocol, hereinafter referred to as SIP) session request to an AF.

The UE sends to the AF a request for requesting to establish an SIP session, where the request is used to perform a service (for example, an IMS voice service) with the AF, and the request carries personal identity information (for example, an IMSI); the AF obtains, according to the personal identity information, a group identity corresponding to the AF, so that when sending an application service message to a PCRF, the AF can add the group identity to the application service message.
801: The AF sends an application service message to the PCRF, where the application service message carries the group identity.

In this embodiment, charging for the UE is triggered based on an AF session, and the AF sends an application service message to the PCRF, where the application service message is application or service information.

Optionally, the AF maintains a mapping relationship between personal identity information and a group identity. For example, when multiple users use a same service (for example, an IMS voice conference call), the users share a same user account or credit pool (Credit Pool), and the AF maintains a mapping relationship between multiple pieces of personal identity information and a group service identity.
802: The PCRF sends a response message (ACK) to the AF.
803: The UE sends a bearer resource allocation or modification request message to an MME.
804: The MME sends a bearer establishment or bearer modification message to an SGW.
805: The SGW sends a bearer establishment or bearer modification message to a PGW.
806: When a dynamic PCC rule is configured on the PGW, the PGW sends an IP-CAN session modification indication message (Indication of IP CAN Session Modification) to the PCRF.
807: The PCRF associates a request of the PCC rule in the IP-CAN session with the application/service information sent by the AF.

Optionally, the PCRF may obtain the group identity carried by the AF, where the group identity may be a group user identity or a group service identity.
808: The PCRF reports event information of resource transmission to the AF.
809: The AF sends to the PCRF a response message of event reporting.

Further, meanwhile, the AF may deliver new application/service information to the PCRF.
810: The PCRF makes a rule decision according to the subscription information, the service information, and the group identity, and generates a PCC rule for the user, where the PCC rule includes the group identity, QoS control of the user, and a charging rule.

Specifically, the PCC rule carries a group user identity to indicate that the user performs group policy control, or carries a group service identity to indicate that the user may perform group charging management together with other users using a same type of service.

In order to perform credit management and data statistics during group charging, the group identity may be an independent group identity, may also use a special charging key (Charging key or Rating group), and may also be a special service identity (Service Identity, used to identify a special group service).
811: The PCRF returns an IP-CAN session establishment acknowledgement message (Acknowledge IP CAN Session Establishment) to the PGW, where the IP-CAN session establishment acknowledgement message carries the PCC rule and the group identity.
812: The PGW installs and executes the PCC rule from the PCRF, determines, according to the group identity, whether a charging session corresponding to the group identity already exists between the PGW and an online charging system; if yes, sends a charging session modification request to the online charging system, and adds the personal identity information of the user equipment to the charging session; if not, establishes a charging session for the user according to the group identity and the personal identity information.

According to different session establishment manners of the PCC rule, step 812 is similar to step 509 and step 609, and is not repeatedly described herein.
813: The OCS returns a credit response message (Credit Response).
814: The PGW sends a create or update bearer request message (Create Bearer Request or Update Bearer Request) to the SGW
815: The SGW sends a create or update bearer request message (Create Bearer Request or Update Bearer Request) to the MME.

Optionally, the SGW generates a charging bill according to the charging rule, where the charging bill includes a group user identity or a group service identity.
816: The MME sends an E-RAB setup or modification request message to an eNodeB, where the message carries an activate dedicated bearer request or modify EPS bearer request message sent to the UE.
817: The eNodeB sends an RRC connection reconfiguration message to the UE.
818: The UE returns an RRC connection reconfiguration complete message to the eNodeB.
819: The eNodeB sends an E-RAB setup response message to the MME.
820: The UE sends a direct transmission message to the eNodeB, where the message carries an activate dedicated bearer response or modify EPS bearer response message.
821: The eNodeB transfers the activate dedicated bearer response or modify EPS bearer response message to the MME.
822: The MME returns a create or update bearer response message to the SGW.
823: The SGW returns a create or update bearer response message to the PGW.
824: The OCS indexes an account of the user by using the group identity, and manages the account corresponding to the group identity.

Step 824 is similar to step 521, and is not repeatedly described herein.

In addition, a charging gateway, such as the PGW/SGW, may generate an offline charging bill for the user.

Optionally, when the PGW/SGW obtains the group identity of the user, the generated offline charging bill carries a group user identity or a group service identity, and an offline charging system performs bill combination and account management according to the identity.

By using the technical solution provided by the present invention, it can be determined, according to a group identity of a user, that the user belongs to a certain group, and accordingly, a charging session is maintained for the user of the group. In this way, group charging can be achieved, thereby avoiding a complex signaling interaction process, and improving the charging efficiency. Further, in this embodiment, by using that a UE initiates a resource request to cause IP-CAN bearer modification as an example, that a user terminal establishes an SIP session with an application function gateway AF, and the AF sends application/service information carrying a group identity corresponding to the user to a PCRF is described. The PCRF generates a PCC rule according to the group identity, delivers the PCC rule to a PGW, and instructs the PGW to create/modify a Gy session, so as to perform Gy session management.

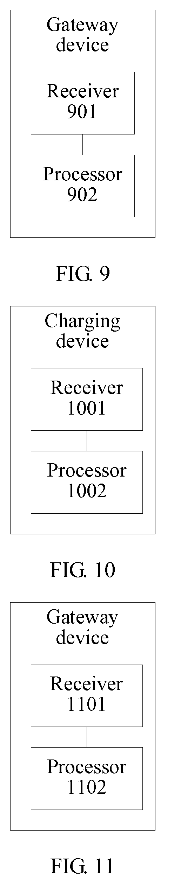

FIG. 9 is a schematic structural diagram of a gateway device according to an embodiment of the present invention. Referring to FIG. 9, the gateway device includes: a receiver 901 and a processor 902.

The receiver 901 is configured to obtain a group identity and personal identity information of a user.

The group identity in this embodiment may be a group user identity or a group service identity, where the group user identity is used to indicate a group to which the user belongs, and the group service identity is used to indicate a service used by the user. When multiple users have a same group user identity, the multiple users belong to one group, and when multiple users have a same group service identity, the multiple users use a same type of service.

The personal identity information may be an international mobile subscriber identification number (International Mobile Subscriber Identification Number, hereinafter referred to as IMSI) or an international mobile equipment identity (International Mobile Equipment Identity, hereinafter referred to as IMEI) of a UE where the user is located.

The receiver 901 is further configured to obtain a charging rule generated according to the group identity.

It should be noted that, the charging rule includes a charging manner and a charging attribute, and is a part of a policy and charging control (Policy and Charging Control, hereinafter referred to as PCC) rule. Because the present invention focuses on the charging rule in the PCC rule, specific content of the PCC rule is not described in detail.

In the embodiment of the present invention, the charging rule is generated by a PCRF according to the group identity, and for users having a same group identity, charging rules carrying the same group identity may be generated. Because users having a same group identity are users belonging to a same group or using a same group service, charging rules carrying the same group identity may be generated for the users having the same group identity, so as to instruct a charging system to perform group charging for the users having the group identity.

The processor 902 is configured to establish, according to the group identity, the personal identity information, and the charging rule, a charging session for a group account corresponding to the group identity, so that the charging system performs group charging according to the group identity and the charging rule.

The charging session refers to a Gy session; the Gy session corresponds to a Gy reference point; the Gy reference point is used to complete online charging between a policy and charging enforcement entity (Policy and Charging Enforcement Function, hereinafter referred to as PCEF) and an online charging system (Online Charging System, hereinafter referred to as OCS); and an online charging function refers to performing real-time charging for a provided service. When a user to be charged online initiates a data service, the PCEF applies to the OCS for a quota in real time, and the OCS determines. according to user information and an amount in a user account, whether to allow the user to perform a packet data service, and delivers the user quota to the PCEF in real time. The OCS tracks usage (time or traffic) of a purchased resource by the user in real time, and deducts a current usage fee from an account balance in real time, and when funds in the account are exhausted, terminates the service or provides a relevant prompt for the user.

Further, the charging session may also refer to a Gz session; the Gz session corresponds to a Gz reference point; the Gz reference point is used to complete offline charging between a PCEF and an offline charging system (Offline Charging System, hereinafter referred to as OFCS); and an offline charging function refers to performing non-real-time charging for a provided service, where the charging may be performed after the charging session is removed.

In this embodiment, charging at least includes: credit management and charging control, and further, charging the group account further includes: performing credit pool management on account information of a group. The credit pool management refers to that a gateway makes a credit request, where the credit request carries the group identity; and the charging system performs, according to the credit request and the account information of the group corresponding to the group identity credit pool management on the group to which the user belongs.

By applying a same charging rule to users having a same group identity, consistency of group service charging can be ensured, and during charging, charging is performed by associating users having a same group identity with a same group account, thereby achieving group charging.

Optionally, the receiver 901 is configured to obtain the group identity and the personal identity information of the user that are added by the user equipment to an attach request message; or
the receiver 901 is configured to obtain the group identity and the personal identity information that are returned by a home subscriber subscription server; or
the receiver 901 is configured to obtain the group identity and the personal identity information that are added by a service subscription database or a group subscription database to a profile information response message; or
the receiver 901 is configured to obtain the group identity and the personal identity information that are added by a mobility management entity to a create session establishment request message; or
the receiver 901 is configured to obtain the group identity and the personal identity information that are added by a policy and charging rules function entity to an IP-CAN session establishment acknowledgement message or an IP CAN session modification acknowledgement message; or
the receiver 901 is configured to obtain, according to the personal identity information, the group identity configured on a mobility management entity; or
the receiver 901 is configured to obtain the group identity and the personal identity information that are added by an application server to an application service message.

Optionally, the device further includes a transmitter, and
the processor 902 is configured to: when the charging rule is that one charging session is established for group users having a same group identity, determine, according to the group identity, whether there is a charging session corresponding to the group identity with the charging system already; if yes, trigger the transmitter to send a credit control modification request message to the charging system, where the credit control modification request message carries the group identity and the personal identity information of the user, so that the charging system adds the personal identity information of the user to the charging session corresponding to the group identity; if not, the processor establishes a charging session for the user according to the group identity and the personal identity information;
or,
the processor 902 is configured to: when it is determined that the charging rule is that multiple charging sessions are established for group users having a same group identity, establish a charging session for the user according to the group identity and the personal identity information, and associate the group identity with the established charging session.

The group identity is associated with the established charging session, so that when performing charging, the charging system can associate charging sessions having a same group identity to perform group charging.

In this embodiment, according to a difference of charging rules, any one of the following cases may exist:
(1) The charging rule is that only one charging session is established for group users having a same group identity.

The only one charging session refers to that for multiple users having a same group identity, only one charging session is maintained for the multiple users, and personal identity information of each user is added to the charging session, so as to achieve an objective of performing group charging for the multiple users of a same group. For a gateway, when establishing a charging session, the gateway sends a credit request message to the charging system, where the credit request message carries a group identity. After a charging session is established between the gateway and the charging system, the charging session is a charging session for the group identity. When it is determined, according to the charging rule, only one charging session is established for users having a same group identity, once receiving an IP-CAN session create message, the gateway determines, according to a group identity carried by the IP-CAN session create message or a group identity obtained from another message, whether a charging session corresponding to the group identity already exists between the gateway and an online charging system; if yes, sends a charging session modification request to the online charging system, where the charging session modification request carries personal identity information of a user equipment, and adds the personal identity information of the user to the charging session, so as to add information about group charging for the user; if not, that is, it is determined that no charging session corresponding to the group identity exists between the gateway and the online charging system currently and the user is currently the only charged object of the group, establishes a charging session for the user according to the group identity and the personal identity information.

Further optionally, it may be configured that a Gy session is not established when the UE is attached, and a Gy session is established only when the UE initiates a service packet request.
(2) The charging rule is that multiple charging sessions are established for group users having a same group identity.

Multiple charging sessions refer to that charging sessions are maintained separately for users that have a same group identity but have different personal identity information, where the number of sessions may be the same as the number of users, and may also be different from the number of users; when the number of sessions is different, the number of users that can be borne by one session may be limited. For example, one charging session can bear N users; when it is determined that the number of users currently borne by the charging session reaches N, a new charging session is established for a subsequent accessing user; when the number of users currently borne by the charging session does not reach N, a credit control modification request message may be sent to the charging system, where the credit control modification request message carries a group identity and personal identity information of the user, so that the charging system adds the personal identity information of the user to the charging session corresponding to the group identity.

It should be noted that, a specific signaling interaction process for establishing a charging session is not described in detail herein.

By using the technical solution provided by the present invention, when it is determined, according to a charging policy, that only one charging session is maintained for users having a same group identity, it can be determined, according to a group identity of a user equipment, that the user belongs to a certain group, and accordingly, only one charging session is maintained for users of the group, thereby avoiding heavy gateway load and a complex signaling interaction process that are caused by that one IP-CAN session bears multiple IP-CAN bearers, improving the charging efficiency, and reducing a network resource overhead. And when it is determined, according to the charging policy, that multiple charging sessions may be maintained for users having a same group identity, it can be determined, according to a group identity of a user, that the user belongs to a certain group, and accordingly, a charging session is maintained for the user of the group. In this way, group charging can be achieved, thereby avoiding a complex signaling interaction process, and improving the charging efficiency.

Optionally, the processor 902 is further configured to: when the user is deactivated, determine whether the user is the only user of the charging session; if yes, deactivate the charging session; if not, initiate a credit control modification request message, where the charging session modification request carries the personal identity information, so that the charging system deactivates, from the charging session, charging for the user corresponding to the personal identity information.

That a user is deactivated refers to that a user equipment is taken off-line. In order to ensure that one user among group users is taken off-line or quits does not affect charging for other users, when a user is deactivated, it is determined whether the user is the only user of a charging session; if yes, the charging session is deactivated, so that the deactivating does not affect charging for the other users; if not, a charging session modification request is initiated, where the charging session modification request carries the personal identity information, so that the charging system deactivates, from the charging session, the user corresponding to the personal identity information. In this case, the charging for the user is removed from the charging session only without affecting charging for the other users, thereby ensuring that charging for group users is performed normally.

Optionally, the group identity is a group identity, a designated charging key (Charging key or Rating group), or a designated service identity (Service identity, used to identify a special group service).

Optionally, the charging system is any one of an online charging system, an offline charging system, and a business & operation support BOSS charging system. A BOSS (Business & Operation Support System, business & operation support system) is usually divided into four parts: a charging and settlement system, an operation and accounting system, a customer service system, and a decision support system. Viewed from a service level, the BOSS is a framework that bears a service system, a CRM (Customer Relationship Management, customer relationship management) system, and a charging system.

It should be noted that, when the gateway device provided in the embodiment performs group charging, only division of the foregoing functional modules is used as an example for description, and in an actual application, the foregoing functions may be allocated to and completed by different functional modules according to needs, that is, an internal structure of the device is divided into different functional modules to complete all or a part of the functions described above. In addition, the gateway device provided by the embodiment belongs to a same idea as the embodiment of the group charging method, and a specific implementation process thereof is not repeatedly described herein. For details, reference may be made to the method embodiment.

FIG. 10 is a schematic structural diagram of a charging device according to an embodiment of the present invention. Referring to FIG. 10, the charging device includes:
a receiver 1001, configured to obtain a group identity and personal identity information of a user,
where the receiver 1001 is further configured to obtain a charging rule generated according to the group identity; and
a processor 1002, configured to perform, according to the group identity and the charging rule, charging on a charging session corresponding to the group identity.

Optionally, the processor 1002 is configured to index, according to the group identity, account information of a group corresponding to the group identity, and perform, according to the charging rule and the account information, charging on the charging session corresponding to the group identity;
or,
the processor 1002 is configured to obtain, according to the personal identity information of the user, a group identity corresponding to the personal identity information from a mapping relationship between personal identity information and a group identity, index, according to the group identity obtained by querying, account information of a group corresponding to the group identity, and perform, according to the charging rule and the account information, charging on the charging session corresponding to the group identity.

Optionally, the receiver 1001 is configured to obtain the group identity and the personal identity information that are added by the user to an attach request message; or, obtain the group identity and the personal identity information that are added by a home subscriber subscription server; or, obtain the group identity and the personal identity information that are added by a service subscription database or a group subscription database to a profile information response message; or, obtain the group identity and the personal identity information that are added by a mobility management entity to a create session establishment request message; or, obtain the group identity and the personal identity information that are added by a policy and charging rules function entity to an IP-CAN session establishment acknowledgement message or an IP CAN session modification acknowledgement message; or, obtain, according to the personal identity information, the group identity configured on a mobility management entity; or, obtain the group identity and the personal identity information that are added by an application server to an application service message.

Optionally, the processor 1002 is further configured to generate, according to the charging rule, a group charging bill for users having a same group identity;
or,
the processor 1002 is further configured to generate, according to the charging rule, charging bills for users in the group corresponding to the group identity, where the charging bills carry the group identity, and combine the generated charging bills into a group charging bill according to the group identity;
or,
the processor 1002 is further configured to generate a group charging bill according to the charging rule, where the group charging bill carries the group identity.

Optionally, the group identity is a group identity, a designated charging key, a designated rating group, or a designated service identity.

Optionally, the charging system is any one of an online charging system, an offline charging system, and a BOSS charging system.

It should be noted that, when the charging device provided by the embodiment performs group charging, only division of the foregoing functional modules is used as an example for description, and in an actual application, the foregoing functions may be allocated to and completed by different functional modules according to needs, that is, an internal structure of the device is divided into different functional modules to complete all or a part of the functions described above. In addition, the charging device provided by the embodiment belongs to a same idea as the embodiment of the group charging method, and a specific implementation process thereof is not repeatedly described herein. For details, reference may be made to the method embodiment.

FIG. 11 is a schematic structural diagram of a gateway device according to an embodiment of the present invention. Referring to FIG. 11, the gateway device includes:
a receiver 1101, configured to obtain personal identity information of a user,
where the receiver 1101 is further configured to obtain a charging rule generated according to the personal identity information; and
a processor 1102, configured to establish, according to the personal identity information and the charging rule, a charging session for a group account corresponding to the personal identity information, so that a charging system performs group charging according to the personal identity information and the charging rule.

Optionally, the receiver 1101 is configured to obtain the personal identity information of the user that is added by a user equipment to an attach request message; or
the receiver 1101 is configured to obtain the personal identity information that is returned by a home subscriber subscription server; or,
the receiver 1101 is configured to obtain the personal identity information that is added by a service subscription database or a group subscription database to a profile information response message; or
the receiver 1101 is configured to obtain the personal identity information that is added by a mobility management entity to a create session establishment request message; or
the receiver 1101 is configured to obtain the personal identity information that is added by a policy and charging rules function entity to an IP-CAN session establishment acknowledgement message or an IP CAN session modification acknowledgement message; or
the receiver 1101 is configured to obtain the personal identity information that is added by an application server to an application service message.

Optionally, the processor 1102 is configured to determine, according to the personal identity information, whether there is a charging session corresponding to the personal identity information with the charging system already; if yes, use the charging session of the personal identity information, so that multiple bearers having the personal identity information share one charging session; if not, establish a charging session for the user according to the personal identity information.

The processor 1102 is configured to add a bearer identity of the user to information about the charging session of the personal identity information, so that multiple bearers having the personal identity information share one charging session.

The processor 1102 is configured to associate the personal identity information with an identity of the established charging session, and add the bearer identity of the user to the information about the established charging session.

Optionally, the processor 1102 is further configured to: when the user is deactivated, determine whether the user is the only user of the charging session; if yes, deactivate the charging session; if not, initiate a credit control modification request message, so that the charging system deactivates, from the charging session, charging corresponding to the user.

Optionally, the charging device is any one of an online charging system, an offline charging system, and a BOSS charging system.

It should be noted that, when the gateway device provided by the embodiment performs group charging, only division of the foregoing functional modules is used as an example, and in an actual application, the foregoing functions may be allocated to and completed by different functional modules according to needs, that is, an internal structure of the device is divided into different functional modules to complete all or a part of the functions described above. In addition, the gateway device provided by the embodiment belongs to a same idea as the embodiment of the group charging method, and a specific implementation process thereof is not repeatedly described herein. For details, reference may be made to the method embodiment.

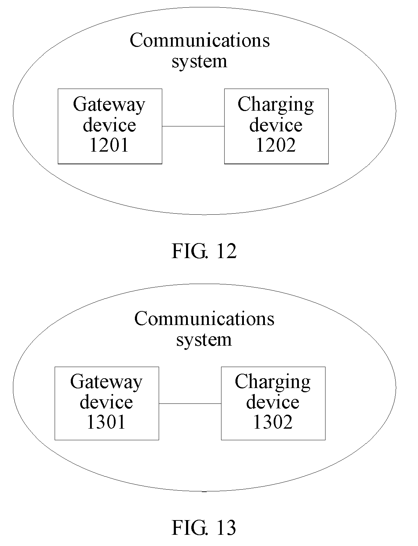

FIG. 12 is a schematic structural diagram of a communications system according to an embodiment of the present invention. Referring to FIG. 12, the system at least includes:
a gateway device 1201, configured to obtain a group identity and personal identity information of a user; obtain a charging rule generated according to the group identity; and establish, according to the group identity, the personal identity information, and the charging rule generated according to the group identity, a charging session for a group account corresponding to the group identity, so that a charging device 1202 performs group charging according to the group identity and the charging rule; and
the charging device 1202, configured to obtain the group identity and the personal identity information of the user; obtain the charging rule generated according to the group identity; and perform, according to the group identity and the charging rule, charging on the charging session corresponding to the group identity.

The charging device may be an OCS, an OFCS, a BOSS, or the like.

It should be noted that the system further includes an eNB, an MME, a PCRF, an HSS/SPR/UDR, or the like.

FIG. 13 is a schematic structural diagram of a communications system according to an embodiment of the present invention. Referring to FIG. 13, the system at least includes:
a gateway device 1301, configured to obtain personal identity information of a user; obtain a charging rule generated according to the personal identity information; and establish, according to the personal identity information and the charging rule, a charging session for a group account corresponding to the personal identity information, so that a charging device 1302 performs group charging according to the personal identity information and the charging rule; and
the charging device 1302, configured to obtain the personal identity information of the user; obtain the charging rule generated according to the personal identity information; and after the charging session is established for the group account corresponding to the personal identity information, perform group charging according to the personal identity information and the charging rule.

The charging device may be an OCS, an OFCS, a BOSS, or the like.

It should be noted that the system further includes an eNB, an MME, a PCRF, an HSS/SPR/UDR, or the like.

A person of ordinary skill in the art may understand that all or a part of the steps of the embodiments may be implemented by hardware, or may be implemented by a program instructing relevant hardware. The program may be stored in a computer readable storage medium. The storage medium may be a read-only memory, a magnetic disk, or an optical disc.

The foregoing descriptions are merely exemplary embodiments of the present invention, but are not intended to limit the present invention. Any modification, equivalent replacement, or improvement made without departing from the spirit and principle of the present invention shall fall within the protection scope of the present invention.

## Claims

1. A group charging method, comprising:
obtaining a group identity and personal identity information of a user;
obtaining a charging rule generated according to the group identity; and
establishing, according to the group identity, the personal identity information, and the charging rule, a charging session for a group account corresponding to the group identity, so that a charging system performs group charging according to the group identity and the charging rule.

2. The method according to claim 1, wherein the obtaining a group identity and personal identity information of a user comprises:
obtaining the group identity and the personal identity information of the user that are added by a user equipment to an attach request message; or
obtaining the group identity and the personal identity information that are returned by a home subscriber subscription server; or
obtaining the group identity and the personal identity information that are added by a service subscription database or a group subscription database to a profile information response message; or
obtaining the group identity and the personal identity information that are added by a mobility management entity to a create session establishment request message; or
obtaining the group identity and the personal identity information that are added by a policy and charging rules function entity to an IP-CAN session establishment acknowledgement message or an IP-CAN session modification acknowledgement message; or
obtaining, according to the personal identity information, the group identity configured on a mobility management entity; or
obtaining the group identity and the personal identity information that are added by an application server to an application service message.

3. The method according to claim 1 or 2, wherein the establishing, according to the group identity, the personal identity information, and the charging rule, a charging session for a group account corresponding to the group identity comprises:
when the charging rule is that one charging session is established for group users having a same group identity, determining, according to the group identity, whether there is a charging session corresponding to the group identity with the charging system; if there is a charging session corresponding to the group identity with the charging system already, sending a credit control modification request message to the charging system, wherein the credit control modification request message carries the group identity and the personal identity information of the user, so that the charging system adds the personal identity information of the user to the charging session corresponding to the group identity; if there is no charging session corresponding to the group identity with the charging system, establishing a charging session for the user according to the group identity and the personal identity information; or
when it is determined that the charging rule is that multiple charging sessions are established for group users having a same group identity, establishing a charging session for the user according to the group identity and the personal identity information.

4. The method according to any one of claims 1 to 3, wherein the method comprises:
when the user is deactivated, determining whether the user is the only user of the charging session; if the user is the only user of the charging session, deactivating the charging session; if the user is not the only user of the charging session, initiating a credit control modification request message, wherein the charging session modification request carries the personal identity information, so that the charging system deactivates, from the charging session, charging for the user corresponding to the personal identity information.

5. The method according to any one of claims 1 to 4, wherein the group identity is a group identity, a designated charging key, or a designated service identity.

6. The method according to any one of claims 1 to 5, wherein the charging system is any one of an online charging system, an offline charging system, and a business & operation support BOSS charging system.

7. A group charging method, comprising:
obtaining, by a charging system, a group identity and personal identity information of a user;
obtaining, by the charging system, a charging rule generated according to the group identity; and
performing, by the charging system according to the group identity and the charging rule, charging on a charging session corresponding to the group identity.

8. The method according to claim 7, wherein the performing, by the charging system according to the group identity and the charging rule, charging on a charging session corresponding to the group identity specifically comprises:
indexing, according to the group identity, account information of a group corresponding to the group identity, and performing, according to the charging rule and the account information, charging on the charging session corresponding to the group identity;
or,
obtaining, according to the personal identity information of the user, a group identity corresponding to the personal identity information from a mapping relationship between personal identity information and a group identity, indexing, according to the group identity obtained by querying, account information of a group corresponding to the group identity, and performing, according to the charging rule and the account information, charging on the charging session corresponding to the group identity.

9. The method according to claim 7 or 8, wherein the obtaining a group identity and personal identity information of a user comprises:
obtaining the group identity and the personal identity information that are added by the user to an attach request message; or
obtaining the group identity and the personal identity information that are added by a home subscriber subscription server; or
obtaining the group identity and the personal identity information that are added by a service subscription database or a group subscription database to a profile information response message; or
obtaining the group identity and the personal identity information that are added by a mobility management entity to a create session establishment request message; or
obtaining the group identity and the personal identity information that are added by a policy and charging rules function entity to an IP-CAN session establishment acknowledgement message or an IP CAN session modification acknowledgement message; or
obtaining, according to the personal identity information, the group identity configured on a mobility management entity; or
obtaining the group identity and the personal identity information that are added by an application server to an application service message.

10. The method according to any one of claims 7 to 9, wherein after the performing, by the charging system according to the group identity and the charging rule, charging on a charging session corresponding to the group identity, the method further comprises:
generating, according to the charging rule, a group charging bill for users having a same group identity;
or,
generating, according to the charging rule, charging bills for users in the group corresponding to the group identity, wherein the charging bills carry the group identity, and combining the generated charging bills into a group charging bill according to the group identity;
or,
generating a group charging bill according to the charging rule, wherein the group charging bill carries the group identity.

11. The method according to any one of claims 7 to 10, wherein the group identity is a group identity, a designated charging key, a designated rating group, or a designated service identity.

12. The group charging method according to any one of claims 7 to 11, wherein the charging system is any one of an online charging system, an offline charging system, and a BOSS charging system.

13. A group charging method, comprising:
obtaining personal identity information of a user;
obtaining a charging rule generated according to the personal identity information; and
establishing, according to the personal identity information and the charging rule, a charging session for a group account corresponding to the personal identity information, so that a charging system performs group charging according to the personal identity information and the charging rule.

14. The method according to claim 13, wherein the obtaining personal identity information of a user comprises:
obtaining the personal identity information of the user that is added by a user equipment to an attach request message; or
obtaining the personal identity information that is returned by a home subscriber subscription server; or
obtaining the personal identity information that is added by a service subscription database or a group subscription database to a profile information response message; or
obtaining the personal identity information that is added by a mobility management entity to a create session establishment request message; or
obtaining the personal identity information that is added by a policy and charging rules function entity to an IP-CAN session establishment acknowledgement message or an IP CAN session modification acknowledgement message; or
obtaining the personal identity information that is added by an application server to an application service message.

15. The method according to claim 13 or 14, wherein the establishing, according to the personal identity information and the charging rule generated according to the personal identity information, a charging session for a group account corresponding to the group identity comprises:
determining, according to the personal identity information, whether there is a charging session corresponding to the personal identity information with the charging system already; if there is a charging session corresponding to the personal identity information with the charging system already, using the charging session of the personal identity information, so that multiple bearers having the personal identity information share one charging session; if there is no charging session corresponding to the group identity with the charging system, establishing a charging session for the user according to the personal identity information.

16. The method according to claim 15, wherein the using the charging session of the personal identity information comprises:
adding a bearer identity of the user to information about the charging session of the personal identity information, so that multiple bearers having the personal identity information share one charging session.

17. The method according to claim 15 or 16, wherein the establishing a charging session for the user according to the personal identity information comprises:
associating the personal identity information with an identity of the established charging session, and adding the bearer identity of the user to the information about the established charging session.

18. The method according to any one of claims 13 to 17, wherein after the establishing, according to the personal identity information and the charging rule generated according to the personal identity information, a charging session for a group account corresponding to the group identity, the method comprises:
when the user is deactivated, determining whether the user is the only user of the charging session; if the user is the only user of the charging session, deactivating the charging session; if the user is not the only user of the charging session, initiating a credit control modification request message, so that the charging system deactivates, from the charging session, charging corresponding to the user.

19. The method according to any one of claims 13 to 18, wherein the charging system is any one of an online charging system, an offline charging system, and a BOSS charging system.

20. A gateway device, comprising:
a receiver, configured to obtain a group identity and personal identity information of a user,
wherein the receiver is further configured to obtain a charging rule generated according to the group identity; and
a processor, configured to establish, according to the group identity, the personal identity information, and the charging rule, a charging session for a group account corresponding to the group identity, so that a charging system performs group charging according to the group identity and the charging rule.

21. The device according to claim 20, wherein the receiver is configured to obtain the group identity and the personal identity information of the user that are added by a user equipment to an attach request message; or
the receiver is configured to obtain the group identity and the personal identity information that are returned by a home subscriber subscription server; or
the receiver is configured to obtain the group identity and the personal identity information that are added by a service subscription database or a group subscription database to a profile information response message; or
the receiver is configured to obtain the group identity and the personal identity information that are added by a mobility management entity to a create session establishment request message; or
the receiver is configured to obtain the group identity and the personal identity information that are added by a policy and charging rules function entity to an IP-CAN session establishment acknowledgement message or an IP CAN session modification acknowledgement message; or
the receiver is configured to obtain, according to the personal identity information, the group identity configured on a mobility management entity; or
the receiver is configured to obtain the group identity and the personal identity information that are added by an application server to an application service message.

22. The device according to claim 20 or 21, wherein the device further comprises a transmitter, and
the processor is configured to: when the charging rule is that one charging session is established for group users having a same group identity, determine, according to the group identity, whether there is a charging session corresponding to the group identity with the charging system already; if there is a charging session corresponding to the group identity with the charging system already, trigger the transmitter to send a credit control modification request message to the charging system, wherein the credit control modification request message carries the group identity and the personal identity information of the user, so that the charging system adds the personal identity information of the user to the charging session corresponding to the group identity; if there is no charging session corresponding to the group identity with the charging system, the processor establishes a charging session for the user according to the group identity and the personal identity information;
or,
the processor is configured to: when it is determined that the charging rule is that multiple charging sessions are established for group users having a same group identity, establish a charging session for the user according to the group identity and the personal identity information.

23. The device according to any one of claims 20 to 22, wherein the processor is further configured to: when the user is deactivated, determine whether the user is the only user of the charging session; if the user is the only user of the charging session, deactivate the charging session; if the user is not the only user of the charging session, initiate a credit control modification request message, wherein the charging session modification request carries the personal identity information, so that the charging system deactivates, from the charging session, charging for the user corresponding to the personal identity information.

24. The device according to any one of claims 20 to 23, wherein the group identity is a group identity, a designated charging key, or a designated service identity.

25. The device according to any one of claims 20 to 24, wherein the charging system is any one of an online charging system, an offline charging system, and a business & operation support BOSS charging system.

26. A charging device, comprising:
a receiver, configured to obtain a group identity and personal identity information of a user,
wherein the receiver is further configured to obtain a charging rule generated according to the group identity; and
a processor, configured to perform, according to the group identity and the charging rule, charging on a charging session corresponding to the group identity.

27. The device according to claim 26, wherein the processor is configured to index, according to the group identity, account information of a group corresponding to the group identity, and perform, according to the charging rule and the account information, charging on the charging session corresponding to the group identity;
or,
the processor is configured to obtain, according to the personal identity information of the user, a group identity corresponding to the personal identity information from a mapping relationship between personal identity information and a group identity, index, according to the group identity obtained by querying, account information of a group corresponding to the group identity, and perform, according to the charging rule and the account information, charging on the charging session corresponding to the group identity.

28. The device according to claim 26 or 27, wherein the receiver is configured to obtain the group identity and the personal identity information that are added by the user to an attach request message; or, obtain the group identity and the personal identity information that are added by a home subscriber subscription server; or, obtain the group identity and the personal identity information that are added by a service subscription database or a group subscription database to a profile information response message; or, obtain the group identity and the personal identity information that are added by a mobility management entity to a create session establishment request message; or, obtain the group identity and the personal identity information that are added by a policy and charging rules function entity to an IP-CAN session establishment acknowledgement message or an IP CAN session modification acknowledgement message; or, obtain, according to the personal identity information, the group identity configured on a mobility management entity; or, obtain the group identity and the personal identity information that are added by an application server to an application service message.

29. The device according to any one of claims 26 to 28, wherein the processor is further configured to generate, according to the charging rule, a group charging bill for users having a same group identity;
or,
the processor is further configured to generate, according to the charging rule, charging bills for users in the group corresponding to the group identity, wherein the charging bills carry the group identity, and combine the generated charging bills into a group charging bill according to the group identity;
or,
the processor is further configured to generate a group charging bill according to the charging rule, wherein the group charging bill carries the group identity.

30. The device according to claims 26 to 29, wherein the group identity is a group identity, a designated charging key, a designated rating group, or a designated service identity.

31. The device according to claims 26 to 30, wherein the charging system is any one of an online charging system, an offline charging system, and a BOSS charging system.

32. A gateway device, comprising:
a receiver, configured to obtain personal identity information of a user,
wherein the receiver is further configured to obtain a charging rule generated according to the personal identity information; and
a processor, configured to establish, according to the personal identity information and the charging rule, a charging session for a group account corresponding to the personal identity information, so that a charging system performs group charging according to the personal identity information and the charging rule.

33. The device according to claim 32, wherein the receiver is configured to obtain the personal identity information of the user that is added by a user equipment to an attach request message; or
the receiver is configured to obtain the personal identity information that is returned by a home subscriber subscription server; or,
the receiver is configured to obtain the personal identity information that is added by a service subscription database or a group subscription database to a profile information response message; or
the receiver is configured to obtain the personal identity information that is added by a mobility management entity to a create session establishment request message; or
the receiver is configured to obtain the personal identity information that is added by a policy and charging rules function entity to an IP-CAN session establishment acknowledgement message or an IP CAN session modification acknowledgement message; or
the receiver is configured to obtain the personal identity information that is added by an application server to in an application service message.

34. The device according to claim 32 or 33, wherein the processor is configured to determine, according to the personal identity information, whether there is a charging session corresponding to the personal identity information with the charging system already; if there is a charging session corresponding to the personal identity information with the charging system already, use the charging session of the personal identity information, so that multiple bearers having the personal identity information share one charging session; if there is no charging session corresponding to the personal identity information with the charging system, establish a charging session for the user according to the personal identity information.

35. The device according to claim 34, wherein the processor is configured to add a bearer identity of the user to information about the charging session of the personal identity information, so that multiple bearers having the personal identity information share one charging session.

36. The method according to claim 34 or 35, wherein the processor is configured to associate the personal identity information with an identity of the established charging session, and add the bearer identity of the user to information about the established charging session.

37. The device according to any one of claims 32 to 36, wherein the processor is further configured to: when the user is deactivated, determine whether the user is the only user of the charging session; if the user is the only user of the charging session, deactivate the charging session; if the user is not the only user of the charging session, initiate a credit control modification request message, so that the charging system deactivates, from the charging session, charging corresponding to the user.

38. The device according to any one of claims 32 to 37, wherein the charging device is any one of an online charging system, an offline charging system, and a BOSS charging system.

39. A communications system, wherein the system at least comprises:
a gateway device, configured to obtain a group identity and personal identity information of a user; obtain a charging rule generated according to the group identity; and establish, according to the group identity, the personal identity information, and the charging rule, a charging session for a group account corresponding to the group identity, so that a charging device performs group charging according to the group identity and the charging rule; and
the charging device, configured to obtain the group identity and the personal identity information of the user; obtain the charging rule generated according to the group identity; and perform, according to the group identity and the charging rule, charging on the charging session corresponding to the group identity.

40. A communications system, wherein the system at least comprises:
a gateway device, configured to obtain personal identity information of a user; obtain a charging rule generated according to the personal identity information; and establish, according to the personal identity information and the charging rule, a charging session for a group account corresponding to the personal identity information, so that a charging device performs group charging according to the personal identity information and the charging rule; and
the charging device, configured to obtain the personal identity information of the user; obtain the charging rule generated according to the personal identity information; and perform group charging according to the personal identity information and the charging rule.
